# EUROPEAN PATENT APPLICATION

(11) **EP 2 623 913 A1**
(43) Date of publication of application: **07.08.2013**
(21) Application number: 11828264.9
(22) Date of filing: 01.03.2011
(51) Int. Cl.: F28D 20/00, F24F 5/00, F25B 1/00

(54) **THERMAL STORAGE DEVICE AND AIR CONDITIONING APPARATUS PROVIDED THEREWITH**

(30) Priority: 28.09.2010 JP 2010216442
(71) Applicant: Panasonic Corporation, Osaka 571-8501 (JP)
(72) Inventor: TSURUDA, Kunihiro, 2-1-61 Shiromi, Chuo-ku Osaka 540-6207 (JP); YAMANAKA, Kanae, 2-1-61 Shiromi, Chuo-ku Osaka 540-6207 (JP); NAKAJIMA, Keizo, 2-1-61 Shiromi, Chuo-ku Osaka 540-6207 (JP); KUBO, Tsugio, 2-1-61 Shiromi, Chuo-ku Osaka 540-6207 (JP); AKAMINE, Ikuo, 2-1-61 Shiromi, Chuo-ku Osaka 540-6207 (JP); KURISUTANI, Hiroharu, 2-1-61 Shiromi, Chuo-ku Osaka 540-6207 (JP)
(74) Representative: Eisenführ, Speiser & Partner
(86) International application number: PCT/JP2011/001179
(87) International publication number: WO 2012/042694

(57) **Abstract**

An object of the present invention is to provide a compact, light-weight and high-quality thermal-storage device in which corrosion of a heat exchanger is suppressed, and a comfortable and high energy-saving air conditioner using the same.

Disclosed is a thermal-storage device including a thermal-storage solution layer composed of a thermal-storage solution comprising water, a heat exchanger immersed in the thermal-storage solution layer, and a thermal-storage container in which the thermal-storage solution layer and the heat exchanger are disposed in the interior space thereof, wherein a slightly soluble basic substance containing, as a main component, at least one selected from the group consisting of magnesium oxide, magnesium hydroxide, magnesium carbonate, magnesium silicate and metal magnesium is immersed in the thermal-storage solution layer.

## Description

### Technical Field

The present invention relates to a thermal-storage device using an aqueous solution as a thermal-storage solution, and an air conditioner provided with the thermal-storage device.

### Background Art

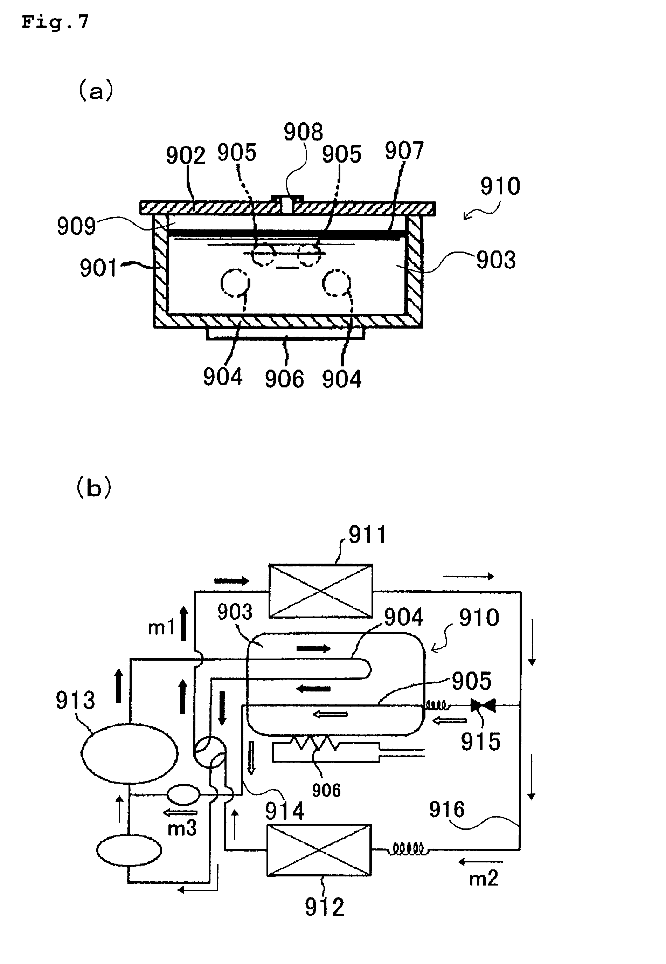

Water has widely been used as a thermal-storage solution (thermal-storage material, thermal-storage medium) of a thermal-storage device since it has relatively large specific heat capacity when compared with other substances, is a liquid at normal temperature, and is also inexpensive. When using as a thermal-storage solution, water is commonly used as an aqueous dihydric alcohol solution containing, as a "coolant", a dihydric alcohol such as ethylene glycol added therein. Specifically, Patent Document 1 discloses, as a thermal-storage device using such thermal-storage solution, the configuration of an open atmospheric type thermal-storage device that is incorporated into a refrigeration cycle of an air conditioner and is provided with a thermal-storage container including a thermal-storage material containing water as a main component. A more specific example of such thermal-storage device will be described with reference to Figs. 7(a) and 7(b), including the configuration applied to an air conditioner.

Fig. 7(a) shows a cross section of a conventional thermal-storage device 910 disclosed in Patent Document 1. In the thermal-storage device 910, a thermal-storage container includes a thermal-storage tank 901 made of metal and a cover body 902 made of metal, and a thermal-storage material 903 is accommodated in the interior space of the thermal-storage tank 901. In order to prevent freezing at low temperature, brine containing water as a main component and 30% ethylene glycol mixed therein is used as the thermal-storage material 903. A plurality of heat-radiating heat exchangers 904 and a plurality of heat-absorbing heat exchangers 905 are provided in the interior space of the thermal-storage tank 901 at the position where the exchangers are immersed in the thermal-storage material 903.

The thermal-storage material 903 stores heat released from the thermal-storage heater 906 and the heat-radiating heat exchangers 904 provided outside the thermal-storage container, and recovers heat by the heat-absorbing heat exchangers 905. Since a refrigerant (not shown) flows inside the heat-absorbing heat exchanger 905, heat is transferred to the refrigerant by recovering heat from the thermal-storage material 903, and thus the temperature of the refrigerant becomes higher. The conventional thermal-storage device 910 enables an improvement in heating startup characteristics in a refrigeration cycle (not shown) disclosed in Patent Document 1 by making use of the thermal-storage and heat recovery.

A 3 mm thick oil film 907 is provided on a surface of the thermal-storage material 903, and this oil film 907 is configured to suppress a decrease in the thermal-storage material 903 due to evaporation. Since a cover body 902 is provided with an opening 908, the opening is configured to suppress excessive pressure rise inside the thermal-storage container due to evaporation or thermal expansion of the thermal-storage material 903. The opening 908 is provided with a steam control unit (not shown) so as not to excessively release steam into the atmosphere. Furthermore, an air layer 909 is formed between the oil film 907 and the cover body 902. The air layer is configured to prevent the thermal-storage material 903 from partially leaking out from the thermal-storage container via the opening 908 (and the steam control unit) due to thermal expansion caused by a temperature rise of the thermal-storage material.

Fig. 7(b) shows a configuration in which the thermal-storage device 910 with the above configuration is incorporated into a refrigeration cycle of an air conditioner. The air conditioner includes an indoor unit 911, an expansion valve (not shown), an outdoor unit 912, a compressor 913, and a pipe 916 that connects them. The indoor unit 911 is provided with an indoor side heat exchanger (not shown) and the outdoor unit 912 is provided with an outdoor side heat exchanger (not shown), and a refrigerant flows inside the pipe. A heating heat pump includes an indoor unit 911, an expansion valve, an outdoor unit 912 and a compressor 913.

Furthermore, a bypass pipe 914 is provided so as to connect a downstream side in a refrigerant flowing direction of the pipe 916 connected to the indoor unit 911, to an upstream side in a refrigerant flowing direction of the pipe 916 connected to the compressor 913. This bypass pipe 914 is provided with a heat-absorbing heat exchanger 905 and is configured to enable the refrigerant to flow by opening a two way valve 915.

With the above configuration, the refrigerant reaches high temperature and high pressure by the compressor 913, and flows inside the pipe 916 along the arrow m1 (filled block arrow) in the drawing, thus reaching the thermal-storage device 910. Heat is released from the high-temperature refrigerant by the heat-radiating heat exchanger 904 and then stored in the thermal-storage material 903 in the thermal-storage device 910. Simultaneously, since the temperature of the thermal-storage material 903 is further raised, for example, to a temperature of 93 to 97°C by the thermal-storage heater 906 attached to the thermal-storage device 910, heat from the thermal-storage heater 906 is also stored in the thermal-storage material 903.

The thermal-storage material 903, the temperature of which was raised to a high temperature by thermal storage, heats the refrigerant flowing through a bypass pipe 914 along the direction indicated by the arrow m3 (open block arrow) in the drawing via a heat-absorbing heat exchanger 905 by opening the two way valve 915. The refrigerant heated by the thermal-storage material 903 (recovered heat from the thermal-storage material 903) reaches the compressor 913 and finally flows up to the indoor unit 911 provided with an indoor side heat exchanger, and then hot air for heating is formed by heat exchanging in this indoor unit 911. The refrigerant, the temperature of which fell to low temperature after heat exchange, flows through the pipe 916 along the direction indicated by the arrow m2 in the drawing, and then returns to the compressor 913 via the outdoor unit 912.

Patent Document 2 discloses a thermal-storage device in which a thermal-storage tank is filled with a latent thermal-storage material containing a hydrated salt as a main component, the device being configured to provide a moisture evaporation prevention film on a surface of the latent thermal-storage material. Specifically, a sodium acetate trihydrated salt containing 1 to 2% of xanthan gum as a thickener mixed therein is exemplified as the latent thermal-storage material, and a paraffin or polymer film is exemplified as the moisture evaporation prevention film on a surface of the latent thermal-storage material. The moisture evaporation prevention film may be basically any film as long as it is less likely to transmit moisture, and may be either a liquid or solid form. However, the Patent Document discloses that the moisture evaporation prevention film is preferably made of a material having flexibility since moisture evaporates to some extent if gaps exist between the film and a surface of the thermal-storage material.

Patent Document 3 discloses a thermal-storage material composition used for a domestic heater/hot water supply, and cooling of electronic parts, the thermal-storage material composition being configured to contain a moisture evaporation inhibitor. Specifically, there is exemplified, as the thermal-storage material composition, a composition prepared by mixing a hydrated salt type thermal-storage material such as sodium acetate trihydrate with a supercooling inhibitor, water, a thickener and a heat transfer accelerator according to the formulation within a predetermined range, followed by melting and stirring. There is also exemplified a composition prepared by adding liquid paraffin as the moisture evaporation inhibitor to the thermal-storage material composition. The moisture evaporation inhibitor is not particularly limited to liquid paraffin as long as it is insoluble in a thermal-storage material and also has a low specific gravity and a high boiling point. For example, animal/vegetable oil, synthetic oil such as silicone oil, and an organic solvent are exemplified.

### Prior Art Documents

### Patent Documents

Patent Document 1: JP H10-288359 A
Patent Document 2: JP S64-10098 A
Patent Document 3: JP 2000-119643 A

### Disclosure of the Invention

### Problems to be Solved by the Invention

However, when the thermal-storage material 903 used in the conventional thermal-storage device 910 is used over the long period, for example, in the case of brine containing water as a main component and 30% ethylene glycol mixed therein, there quite rarely existed an example in which ethylene glycol is oxidized by oxygen in air to form an acidic organic acid, resulting in acidification of water quality, and thus the heat-radiating heat exchanger 904 and the heat-absorbing heat exchanger 905 undergo corrosion. Also in the case of a thermal-storage material containing water as a main component, there quite rarely existed an example in which water exhibits acidity with pH 5 to 6, and also the heat-radiating heat exchanger 904 and the heat-absorbing heat exchanger 905 undergo corrosion.

To solve the problem, a treatment is taken against corrosion by using, as the material of the heat-radiating heat exchanger 904 and the heat-absorbing heat exchanger 905, SUS316 that is a material having extremely excellent corrosion resistance, among stainless steels. In the case of a form of use under severe corrosion condition, an attempt is made to improve corrosion resistance by further enhancing corrosion resistance through electrolytic polishing of a surface of the material, or reducing heating burden through an increase in a surface area, or increasing the thickness of the material. Therefore, there also arose a problem that the thermal-storage device becomes expensive or heavy. In the case of short period of use and small corrosion amount, copper can be used. In that case, while the thickness is increased to ensure corrosion resistance, there also arose a problem that the thermal-storage device becomes heavy. There also arose a problem that the heat exchanger undergoes corrosion at high temperature of 100°C, and thus making it impossible to use the thermal-storage device at a temperature raised to such high temperature.

In order to solve the above problem, an object of the present invention to provide a compact, light-weight and high-quality thermal-storage device in which the pH is maintained within a range from neutrality to weak alkalinity by immersing a magnesium-based slightly soluble basic substance in a thermal-storage solution layer, and corrosion of a heat exchanger is suppressed by this humoral pH, and a comfortable and high energy-saving air conditioner using the same.

### Means for Solving the Problems

In order to solve the above problem, the thermal-storage device according to the present invention includes a thermal-storage solution layer composed of a thermal-storage solution containing at least water (or a thermal-storage solution consisting of at least water), a heat exchanger immersed in the thermal-storage solution layer, and a thermal-storage container in which the thermal-storage solution layer and the heat exchanger are disposed in the interior space thereof, and a slightly soluble basic substance containing, as a main component, at least one selected from the group consisting of magnesium oxide, magnesium hydroxide, magnesium carbonate, magnesium silicate and metal magnesium is immersed in the thermal-storage solution layer.

The magnesium-based slightly soluble basic substance has a property in which water quality pH increases to at most 10.5 in a weak alkaline range, and the humoral pH of a thermal-storage solution layer is maintained in a range from neutrality to weak alkalinity over the long period by capturing acidic ions that cause corrosion, leading to neutralization. As a result, corrosion of a heat exchanger is suppressed by the humoral pH, and thus enabling retention of corrosion resistance over the long period, reduction in thickness and elimination of various mechanical and control mechanisms for suppression of corrosion. Therefore, the obtained thermal-storage device is a compact, light-weight and high-quality thermal-storage device.

In the thermal-storage device, further improvement of a neutralizing capacity and lifetime could be made by controlling the concentration of magnesium oxide in a slightly soluble basic substance to 70% (% by weight, the same shall apply hereinafter) or more, and preferably 85% or more, and composing balance of various metal oxides (metal oxides other than magnesium oxide, such as silicic acid, aluminum oxide, iron oxide, calcium oxide and boric acid). Much more improvement of a neutralizing capacity and lifetime could also be made by firing at 1,500 to 2, 300°C to obtain a magnesium oxide-based slightly soluble basic substance having a particle diameter of 1 to 15 mm.

In the thermal-storage device, there is no particular limitation on a specific configuration of a thermal-storage solution. The thermal-storage solution is not limited only to water and is preferably an aqueous solution containing a dihydric alcohol. Thus, it is possible to avoid freezing even if the temperature of the thermal-storage solution reaches a freezing point or lower. When using a thermal-storage solution mixed with an anti-oxidizing solution that prevents oxidation of a dihydric alcohol, the amount of an organic acid thus formed decreases to improve lifetime of a magnesium-based slightly soluble basic substance, and thus making it possible to maintain the humoral pH of a thermal-storage solution layer in a range from neutrality to weak alkalinity over the long period by capturing acidic ions that cause corrosion, leading to neutralization. As a result, it is possible to maintain more satisfactory corrosion resistance of a heat exchanger over the long period.

In the above thermal-storage device, it is preferred that an evaporation prevention layer is disposed on the upper portion of the thermal-storage solution layer, the evaporation prevention layer is composed of a solvent composition of at least one water-insoluble solvent, the solvent composition has a pour point lower than normal temperature, and the water-insoluble solvent contains at least any one of hydrocarbons having carbon atoms within a range from 24 to 44. With the above configuration, since the solvent composition contains a hydrocarbon having carbon atoms within a specific range, an organic acid is formed in a small amount and also oxygen in air is less likely to penetrate into a thermal-storage solution. Thereby, since lifetime of a magnesium-based slightly soluble basic substance is improved, the humoral pH of a thermal-storage solution layer can be maintained within a range from neutrality to weak alkalinity over the long period by capturing acidic ions that cause corrosion, leading to neutralization, and thus making it possible to further ensure reduction in corrosion of a thermal-storage heat exchanger. In addition, since the thermal-storage solution layer is suppressed from being evaporated by the evaporation prevention layer, satisfactory thermal-storage characteristics can be maintained over the long period without requiring replenishment.

The above thermal-storage device may be configured to be further provided with a heat source that heats the thermal-storage solution, and a thermal-storage heat exchanger that recovers heat stored in the thermal-storage solution layer. The thermal-storage device preferably has a configuration in which the heat source is provided outside the thermal-storage solution layer, and the thermal-storage heat exchanger is provided inside the thermal-storage container at the position where the thermal-storage heat exchanger is immersed in the thermal-storage solution layer. With the configuration, it becomes possible to perform more preferable thermal storage by being provided with the heat source, and it is possible to preferably recover stored heat by being provided with the thermal-storage heat exchanger. When using, as a heat source, a device having a function other than a heating function, for example, a compressor located outside the thermal-storage solution layer, waste heat can be recovered by effective thermal storage.

In the above thermal-storage device, the thermal-storage container is preferably provided so as to surround the heat source. With the configuration, a thermal-storage container is located at the periphery of a heat source, so that it is possible to efficiently perform thermal store of heat from the heat source.

In the above thermal-storage device, the thermal-storage container is preferably in contact with the heat source through a thermal conductive member. With the configuration, a thermal-storage container is in contact with a heat source through a thermal conductive member, so that it is possible to efficiently transfer heat from the heat source to a thermal-storage container.

The thermal-storage device according to the present invention can be preferably used in any field for performing thermal storage, and one typical example thereof includes an air conditioner. That is, an air conditioner including the thermal-storage device with the above configuration is also included in the present invention.

### Effects of the Invention

The present invention can provide a thermal-storage device in which reliability is improved by suppressing corrosion of a thermal-storage heat exchanger, and a comfortable and high energy-saving air conditioner using the same.

### Brief Description of the Drawings

Fig. 1 is a schematic cross-sectional view showing an example of the configuration of a thermal-storage device according to a first embodiment of the present invention.
Fig. 2 is an effect characteristic graph (characteristic graph of the water quality pH and the copper ion concentration) of the thermal-storage device according to the first embodiment of the present invention.
Fig. 3 is a schematic cross-sectional view showing an example of the configuration of a thermal-storage device according to a second embodiment of the present invention.
Fig. 4 is an effect characteristic graph (composition analysis graph of an evaporation prevention layer) of the thermal-storage device according to the second embodiment of the present invention.
Fig. 5(a) is a transverse cross-sectional view showing an example of the configuration of the thermal-storage device according to the second embodiment of the present invention, and Fig. 5(b) is a longitudinal cross-sectional view of the thermal-storage device shown in Fig. 5(a).
Fig. 6 is a block diagram showing an example of the configuration of an air conditioner according to a third embodiment of the present invention.
Fig. 7(a) is a cross-sectional view showing an example of the configuration of a conventional thermal-storage device, and Fig. 7(b) is a block diagram showing an example of the configuration of an air conditioner provided with the thermal-storage device shown in Fig. 7(a).

### Detailed Description of The Invention

Preferred embodiments of the present invention will be described below with reference to the accompanying drawings. The present invention is not limited by the embodiments. Throughout all drawings, identical or corresponding components are denoted by identical reference numerals, and repetitive descriptions are omitted.

### (First Embodiment)

### [Configuration of Thermal-Storage Device]

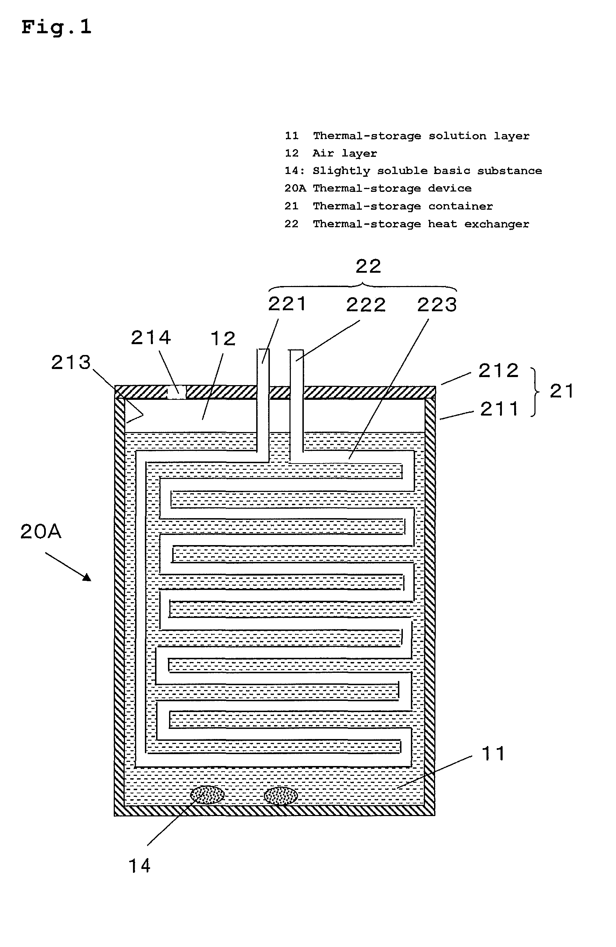

First, a specific configuration of a thermal-storage device according to the present embodiment will be specifically described with reference to Fig. 1.

As shown in Fig. 1, a thermal-storage device according to the present embodiment 20A is provided, in the interior space thereof, with a thermal-storage solution layer 11 composed of a thermal-storage solution containing at least water (or including at least water), and a heat exchanger 22 immersed in the thermal-storage solution layer 11. Furthermore, a slightly soluble basic substance 14 is immersed in the thermal-storage solution layer 11 (that is, the thermal-storage solution layer 11 contains a solid slightly soluble basic substance 14).
As used herein, the term "slightly soluble" of "slightly soluble basic substance" refers to a "property in which a substance initially exists in a solid form, while a part thereof is dissolved very slightly when immersed in an aqueous solution containing a thermal-storage solution". In many cases, dissolution of the slightly soluble basic substance has been performed continuously during use over the long period, for example, 30 years. When the slightly soluble basic substance is used over the long period, the entire substance may be sometimes dissolved in the aqueous solution containing a thermal-storage solution, and thus finally causing disappearance.
The slightly soluble basic substance 14 contains, as a main component, at least one of magnesium oxide, magnesium hydroxide, magnesium carbonate, magnesium silicate and metal magnesium (i.e., magnesium-based slightly soluble basic substance).

A thermal-storage container 21 includes a box portion 211 and a cover portion 212. The box portion 211 is a body of the thermal-storage container 21 and has an approximately rectangular shape and a top surface thereof serves as an upper opening 213. The interior space of the box portion 211 is configured to be able to store the thermal-storage solution layer 11, and the interior space is communicated with the external space via the upper opening 213. The cover portion 212 is provided so as to cover the upper opening 213 of the box portion 211, and is provided with a vent hole 214 communicated with the interior space of the box portion 211 at a part thereof. Therefore, the interior space of the thermal-storage container 21 is communicated with outside air via the vent hole 214 even in a state where the upper opening 213 of the box portion 211 is closed by the cover portion 212.

The box portion 211 and the cover portion 212 may be composed of a material and a shape that can stably hold the thermal-storage solution layer 11 in the interior space. The stainless steel (SUS) or a fiber-reinforced plastic (FRP) such as a PPS resin is commonly used as the material, while a rectangular or cubic shape is commonly exemplified as the shape. There is also no particular limitation on the internal volume of the box portion 211, and the box portion may be designed so as to obtain an appropriate volume according to use conditions of a thermal-storage device 20A.

The configuration of each layer to be formed in the thermal-storage container 21 will be specifically described with reference to Fig. 1. As mentioned above, the thermal-storage container 21 is provided therein with a thermal-storage solution layer 11 by storing a thermal-storage solution. Therefore, in the case of such application, the thermal-storage solution layer 11, the evaporation prevention layer 13 and the air layer 12 are formed inside the thermal-storage container 21 in this order from the lower side. There is no particular limitation on the thickness of each of the thermal-storage solution layer 11, the evaporation prevention layer 13 and the air layer 12, and an appropriate thickness may be set according to various conditions such as shape of the thermal-storage container 21, volume of the interior space, and volume increment of the thermal-storage solution due to thermal expansion. Namely, if a spacial margin (air layer 12) for preventing the thermal-storage solution from leaking out through the vent hole 214 due to thermal expansion is formed, each thickness of the thermal-storage solution layer 11 and the air layer 12 may have any value.

The vent hole 214, with which the cover portion 212 is provided, is configured to enable internal air forming the air layer 12 to flow out of the thermal-storage container 21, or to release steam or dissolved air generated from the thermal-storage solution to the outside in order to reduce an increase in pressure inside the thermal-storage container 21. The opening area may be optimized so as to suppress air constituting the air layer 12 from excessively flowing inside or outside the thermal-storage container 21, or to suppress the thermal-storage solution from decreasing as a result of excessive release of steam generated from thermal-storage container 21. There is no particular limitation on specific configurations such as position, shape and number of the vent hole 214, and the configuration may be the configuration that can realize reduction of an increase in pressure and suppression of a decrease in the thermal-storage solution. The vent hole 214 may be provided on the upper portion of the box portion 211, not the cover portion 212, or may be provided on the upper portion of both portions. It is possible to use, as a unit configured to adjust an internal pressure against an increase in pressure, a unit to be fit into the position that comes into contact with internal air in the cover portion 212, the unit being made of a rubber material having pinholes.

As shown in Fig. 1, a thermal-storage type heat exchanger 22 has a pipe-shaped configuration, provided so as to extend through inside the thermal-storage container 21, and is configured to enable a heating medium for heat exchange (referred to as a heat exchange medium for convenience) to flow therein. The position, at which the thermal-storage type heat exchanger 22 is provided, is the position inside the thermal-storage container 21, at which the heat exchanger is immersed in the thermal-storage solution layer 11.

An inlet 221 and an outlet 222 as both ends of the thermal-storage type heat exchanger 22 pass through the cover portion 212 and are exposed outside from the above the thermal-storage container 21, and an external pipe capable of enabling a heat exchange medium to flow is connected to these inlet 221 and outlet 222. Most of the body pipe portion 223 constituting most of the thermal-storage type heat exchanger 22 is formed in a zigzag-shape shape, and a body pipe portion 223 has a unicursal shape from the inlet 221 to the outlet 222. Most of this body pipe portion 223 is immersed in the thermal-storage solution layer 11. The heat exchange medium passes through the inside of the body pipe portion 223 from the inlet 221 toward the outlet 222, thereby performing heat exchange between the thermal-storage solution layer 11 and the heat exchange medium. There is no particular limitation on specific configuration or material of the thermal-storage type heat exchanger 22, and a known configuration can be preferably used.

There is no particular limitation on the method of thermal-storage and heat recovery by the thermal-storage type heat exchanger 22 and, for example, the following two types of methods can be used.

First, a first method is a method using the thermal-storage type heat exchanger 22 as a radiation source. Specifically, heat is stored in the thermal-storage solution layer 11 by releasing heat stored in the heat exchange medium into the thermal-storage solution layer 11 while passing through a high-temperature heat exchange medium (for example, warm water or a high-temperature refrigerant) in the body pipe portion 223. Not shown in Fig. 1, a heat exchanger is provided separately from the thermal-storage type heat exchanger 22, and heat is recovered from the thermal-storage solution layer 11 by passing through a low-temperature heat exchange medium (for example, cold water or a low-temperature refrigerant) in this heat exchanger. The configurations for thermal-storage and heat recovery can be reversed.

Next, a second method is a method in which heat supplier not shown in Fig. 1 (a heat exchanger other than the thermal-storage type heat exchanger 22, or a heat source) is also provided inside or outside the thermal-storage container 21. Specifically, heat is stored from the heat supplier to the thermal-storage solution layer 11 and a low-temperature heat exchange medium is passed through the inside of the thermal-storage type heat exchanger 22, thereby recovering heat from the thermal-storage solution layer 11 and transferring heat to a device using heat (not shown) connected to the outlet 222 of the thermal-storage type heat exchanger 22.

The effects of the present invention will be specifically described by way of Examples and Comparative Examples.

### [Effect Verification of Thermal-Storage Device]

A thermal-storage device 20A used in the effect verification will be specifically described by way of Examples. A PPS resin (a polyphenylene sulfide resin) was formed as a thermal-storage container 21 to obtain a box portion 211 and a cover portion 212. A thermal-storage heat exchanger 22 composed of a copper coil and a magnesium oxide-based slightly soluble basic substance 14 were immersed (disposed) in the internal space of the box portion 211 and then a thermal-storage solution, prepared by mixing city water with chlorine ions or acidic ions such as sulfuric acid ions thereby adjusting to initial pH 5.2, was injected into the interior space on the box portion 211 to form a thermal-storage solution layer 11. Then, the cover portion 212 was laminated on the box portion 211, and thus completing the thermal-storage device 20A. Evaporation and pressure rise of the thermal-storage solution are suppressed or prevented as much as possible by laminating the cover portion 212 on the box portion 211 in a state of being providing microspace therebetween in the thermal-storage device 20A.

Various evaluations in Examples and Comparative Examples were performed by the following manners. In an effect confirmation test, each of various slightly soluble basic substances 14 was immersed in a thermal-storage solution with the initial pH 5.2 and the test was performed under predetermined conditions (at 80°C for 14 days). Then, characteristics before and after the test were evaluated. The evaluated characteristics are the pH of the thermal-storage solution before the test (initial) and after the test, corrosion resistance of the thermal-storage heat exchanger 22 made of copper, and lifetime of the slightly soluble basic substance 14. The test results are evaluated by four criteria of "Excellent", "Satisfactory", "Insufficient" and "Very poor" based on the measurement values of characteristics, and each is indicated by the following symbols "A" "B" "C" and "D".

The pH of the solution is determined by measuring the humoral pH of a thermal-storage solution before the test (initial) and after the test. The pH control effect is the item to be evaluated by confirming whether or not the solution pH can be adjusted within a range from neutrality to weak alkalinity by capturing chlorine ions or acidic ions such as sulfuric acid ions mixed in the thermal-storage solution, leading to neutralization. In this test, since the pH before the test (initial) is identical to 5.2, evaluation is performed by the pH after the test. That is, the pH of 7 to 10.5 was rated "A", the pH of 6 to 7 and 10.5 to 11 was rated "B", the pH of 5.5 to 6 and 11 to 11.5 was rated "C", and the pH of 5 or lower and 11.5 or higher was rated "D".

Corrosion resistance of a heat exchanger was evaluated by the concentration of copper ions eluted in a thermal-storage solution. In this test, since the concentration of copper ions before test (initial) is 0 ppm in all Examples, evaluation is performed by the concentration of eluted copper ions after the test. That is, the concentration of eluted copper ions of less than 1 ppm was rated "A", the concentration of eluted copper ions of 1 to 3 ppm was rated "B", the concentration of eluted copper ions of 3 to 10 ppm was rated "C", and the concentration of eluted copper ions of more than 10 ppm was rated "D".

Lifetime of a slightly soluble basic substance 14 was evaluated by the following procedure. Specifically, the concentration (mg/L) of magnesium ions dissolved in the thermal-storage solution after an acceleration test (after endurance test) was measured, and the value X (mg) obtained by multiplying the concentration by a liquid amount (L) of the thermal-storage solution was regarded as the amount of magnesium X (mg) required to capture an organic acid, that causes a decrease in humoral pH of a thermal-storage solution. Assuming that the amount of a slightly soluble basic substance 14 charged before the test (initial) is Y (mg), the amount of magnesium M (mg) contained therein is indicated by the equation: M = Y × (24/A), where the symbol A denotes a molecular weight (g) calculated from the composition of the slightly soluble basic substance 14, and the molecular weight of magnesium is 24 (g). When the amount of magnesium X required to capture an organic acid is subtracted from the amount of Magnesium M contained in the slightly soluble basic substance 14 charged before the test (initial), the amount of remaining magnesium Z (Z = M - X) is found. Finally, when the amount of remaining magnesium Z is divided by the amount Y of the initially charged slightly soluble basic substance 14, a ratio T (T = Z/Y) of the amount of remaining magnesium Z to the initially charged slightly soluble basic substance Y is found. As the ratio T of the amount of remaining magnesium Z to the initially charged slightly soluble basic substance Y becomes larger, lifetime increases.

In this test, the ratio T of 0.6 or more was rated "A", the ratio of 0.4 to 0.6 was rated "B", the ratio of 0.2 to 0.4 was rated "C", and the ratio of 0.2 or less was rated "D".

In comprehensive judgment, the respective evaluation items of the pH control effect, corrosion resistance of a heat exchanger made of copper, and lifetime of a slightly soluble basic substance were comprehensively evaluated. If one or more evaluation items are rated "A" and others are rated "B" without including "C" or "D", rating "A" was awarded in the comprehensive judgment. If all evaluation items are rated "B" without including "A", "C" or "D", rating "B" was awarded in the comprehensive judgment. If any one of evaluation items is rated "C", rating "C" was awarded in the comprehensive judgment even if including "A" and "B". If any one of evaluation items is rated "D", rating "D" was awarded in the comprehensive judgment even if including "A", "B" or "C".

The magnesium-based slightly soluble basic substances 14 used in the examination are magnesium oxide, magnesium hydroxide, magnesium carbonate, magnesium silicate and metal magnesium, and all of them are materials containing a magnesium component as a main component.

### (Example 1 of the Present Invention)

A slightly soluble basic substance 14 of magnesium oxide was immersed in a thermal-storage solution using city water with initial pH 5.2 in a thermal-storage container, and then a test was performed under predetermined conditions and characteristics were evaluated. The summarized results are shown in Table 1.

### (Example 2 of the Present Invention)

In the same manner as in Example 1, except that magnesium hydroxide was used as the slightly soluble basic substance 14, each evaluation was performed. The results are shown in Table 1.

### (Example 3 of the Present Invention)

In the same manner as in Example 1, except that magnesium carbonate was used as the slightly soluble basic substance 14, each evaluation was performed. The results are shown in Table 1.

### (Example 4 of the Present Invention)

In the same manner as in Example 1, except that magnesium silicate was used as the slightly soluble basic substance 14, each evaluation was performed. The results are shown in Table 1.

### (Example 5 of the Present Invention)

In the same manner as in Example 1, except that metal magnesium was used as the slightly soluble basic substance 14, each evaluation was performed. The results are shown in Table 1.

### (Conventional Example)

In the same manner as in Example 1, except that the slightly soluble basic substance 14 was not used, each evaluation was performed. The results are shown in Table 1.

### (Comparative Example)

In the same manner as in Example 1, except that calcium oxide was used as the slightly soluble basic substance 14, each evaluation was performed. The results are shown in Table 1.

### (Evaluation Results of the Present Invention)

Each of various slightly soluble basic substance 14 was immersed in a thermal-storage solution using city water with the initial pH 5.2 and then a test was performed under predetermined conditions (at 80°C for a month). The results are summarized in Table 1.

**Table 1**

| Classification | | Present invention | | | | | Conventional Example | Comparative Example |
|---|---|---|---|---|---|---|---|---|
| | | Present invention (1) | Present invention (2) | Present invention (3) | Present invention (4) | Present invention (5) | | |
| Slightly soluble basic substance | | Magnesium oxide | Magnesium hydroxide | Magnesium carbonate | Magnesium silicate | Metal magnesium | None | Calcium oxide |
| Solution pH | Before test | 5.2 | 5.2 | 5.2 | 5.2 | 5.2 | 5.2 | 5.2 |
| | After test | 8.5 | 7.9 | 7.6 | 7.7 | 8.6 | 5.2 | 11.9 |
| pH control effect | | B | B | B | B | B | D | D |
| Corrosion resistance of heat exchanger | | B | B | B | B | B | D | D |
| Lifetime of basic substance | | A | A | B | B | A | - | - |
| Comprehensive judgment | | A | A | B | B | A | D | D |

| | | | | | | | | |
|---|---|---|---|---|---|---|---|---|
| A Excellent B Satisfactory C Insufficient D Very poor | | | | | | | | |

In the present invention, since the magnesium-based slightly soluble basic substance 14 is used, satisfactory pH control effect is exerted since the pH became 7.6 to 8.6 after the test, and thus copper constituting the thermal-storage type heat exchanger 22 exhibits satisfactorily corrosion resistance. The slightly soluble basic substance 14 also exhibited satisfactory lifetime.

On the other hand, in Conventional Example, since the slightly soluble basic substance 14 is not used, the thermal-storage solution maintains pH 5.2 after the test, and thus copper as the thermal-storage heat exchanger 22 exhibited significantly poor corrosion resistance. In Comparative Example in which calcium oxide was used as the slightly soluble basic substance, the pH increased to 11.9, and thus copper constituting the thermal-storage heat exchanger 22 exhibited poor corrosion resistance. The reason why the pH increased to little less than 12 is considered that an adverse influence was exerted since a calcium-based basic substance such as calcium oxide has a property that the pH increased to at most 12.5. In Comparative Example, a similar test was performed using a basic substance such as sodium or potassium. As a result, the pH increased to around 13, and thus making it impossible to ensure corrosion resistance of copper that constitutes the thermal-storage heat exchanger 22. Therefore, this comparative example was removed from examination.

### [Effect Verification 2 of Thermal-Storage Device]

Similar effect confirmation test was performed by a thermal-storage solution using an aqueous ethylene glycol solution with pH 5 adjusted by mixing formic acid or glycolic acid. Each of various slightly soluble basic substances 14 was immersed and a test was performed under predetermined conditions (at 80°C for a month). This thermal-storage solution is a thermal-storage solution composed of a base solution prepared by mixing about 70% of deionized water with 30% of ethylene glycol as a dihydric alcohol and a trace amount of an addition solution, the value of the pH of the thermal-storage solution being preliminarily adjusting to 5 by mixing formic acid or glycolic acid formed by using the base solution over the long term.

In the present invention, since a magnesium-based slightly soluble basic substance 14 is used, the pH of the thermal-storage solution became 7 to 9 after the test, and the solution has satisfactory pH control effect. Thus, copper constituting thermal-storage type heat exchanger 22 exhibits satisfactorily corrosion resistance. Furthermore, the slightly soluble basic substance 14 exhibited satisfactory lifetime. On the other hand, in Conventional Example, since the slightly soluble basic substance 14 is not used, the pH maintains 5 after the test, and thus copper constituting the thermal-storage type heat exchanger 22 exhibits very poor corrosion resistance. In Comparative Example using calcium oxide as the slightly soluble basic substance, the pH increased to 12, and thus copper constituting thermal-storage type heat exchanger 22 exhibits insufficient corrosion resistance.

When using ethylene glycol accounting for 30% of a thermal-storage solution over the long period, hydroxyl groups (-OH) as the components are oxidized by dissolved oxygen to form an organic acid such as glycolic acid or formic acid. Therefore, in the case of being free from a slightly soluble basic substance 14, like Conventional Example, when a thermal-storage solution using an aqueous solution of ethylene glycol is used over the long period, an organic acid is formed and the pH shifts to the acidic side, and thus copper constituting thermal-storage type heat exchanger 22 exhibits insufficient corrosion resistance. Like the present invention, when a magnesium-based slightly soluble basic substance 14 having a moderate neutralizing capacity is used, the humoral pH is adjusted within a range from neutrality to weak alkalinity by capturing the thus formed organic acid after moderate dissolution. On the other hand, when a calcium oxide-based slightly soluble basic substance having an excessive neutralizing capacity is used, although the thus formed organic acid can be captured, the humoral pH excessively increased to 12 due to excess neutralization, and thus copper constituting thermal-storage type heat exchanger 22 exhibited insufficient corrosion resistance.

### [Relation between Water Quality pH and Concentration of Eluted Copper Ions]

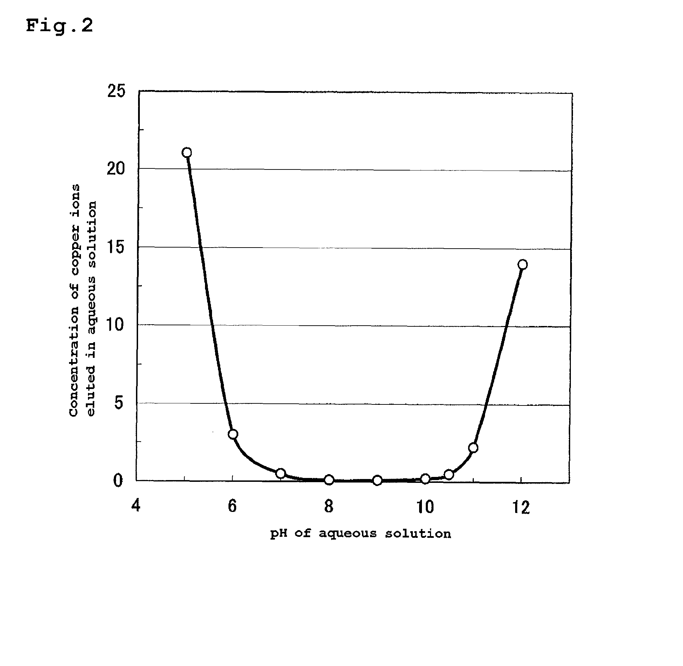

In order to clarify the above-mentioned corrosion reduction effect, an acceleration test was performed by immersing a copper tube in aqueous solutions each having a different pH, and then the concentration of eluted copper ions was measured. Fig. 2 is an effect characteristic graph showing a relation between the pH and the concentration of eluted copper ions. It is found that the concentration of eluted copper ions is low in the pH range of 6 to 11, preferably 7 to 10.5, and quickly increases in the acidic range of pH 6 or lower and the alkaline range of pH 11 or higher. This reason will be described. Copper undergoes corrosion due to galvanization with oxygen dissolved in water (referred to as dissolved oxygen) and cause elution of copper ions. Since a passive state is formed by dissolved oxygen in the neutral to weak alkaline range such as pH range of 7 to 10.5, corrosion resistance is improved and thus copper ions are slightly eluted. However, passive dissolution of copper oxide occurs in the acidic range of pH 6 or lower and thus lots of copper ions Cu²⁺ are eluted. In the alkaline range of pH 11 or higher, passive dissolution of copper oxide occurs and thus lots of copper ions CuO₂²⁻ or HCuO₂⁻ are eluted.

The pH of an aqueous solution is determined by the magnitude of the amounts of acidic ions and alkali ions dissolved in the aqueous solution. When lots of acidic ions such as organic acid exist, the pH shifts to the acidic side, whereas, lots of alkaline ions such as magnesium ions, the pH shifts to the alkaline side. A magnesium-based slightly soluble basic substance 14 has the following property. That is, when it is immersed in an aqueous solution, magnesium ions are eluted to cause shift of the pH to the alkaline side. However, the pH increases to at most around 10.5, and pH decrease is prevented by capturing acidic ions of an organic acid that cause pH decrease. Therefore, the pH of a thermal-storage solution layer 11 containing such slightly soluble basic substance 14 immersed therein does not increase to 10.5 or higher, and the pH does not decrease to lower than 6 when immersing the slightly soluble basic substance 14 in the amount required for neutralization that is determined by preliminarily estimating the amount of the thus formed organic acid. As a result, the pH of thermal-storage solution layer 11 can be adjusted within a range from 6 to 10.5 at which copper ions are slightly eluted.

### [Optimum Composition of Slightly Soluble Basic Substance]

Among the examined magnesium-based slightly soluble basic substances 14, magnesium oxide, magnesium hydroxide and metal magnesium are excellent because of long lifetime. In particular, magnesium oxide had such an advantage that it is easy to handle because of forming into a granular shape through firing, and it can be used with a sense of security because of free from generation of a gas such as hydrogen. Thus, a material containing magnesium oxide as a main component was studied in the subsequent examination.

Magnesium oxide has excellent neutralization characteristics as a slightly soluble basic substance 14, but has a problem that it absorbs dissolved carbon dioxide to form basic magnesium carbonate when immersed in water over the long period, leading to decreased neutralizing capacity and also slightly decreased lifetime. To prevent the problem, an attempt was made to mix magnesium oxide with a small amount of a secondary component (mixing in small amount). As a result, when the concentration of magnesium oxide is adjusted to 70% or more, and preferably 85% or more, and balance is composed of various metal oxides (for example, metal oxides other than magnesium oxide, such as silicic acid, aluminum oxide, iron oxide, calcium oxide and boric acid), satisfactory results could be obtained. The reason is considered as follows. That is, when magnesium oxide is mixed with these metal oxides to form a mixture, a melting point decreases and firing can be performed at low temperature, and thus a stables oxide is obtained by the crystal growth to cause significant decrease in absorbability of dissolved carbon dioxide. As a result, a basic magnesium carbonate becomes less likely to be formed. Also, a composition containing a composite of magnesium oxide and various metal oxides as a main component also has such an advantage that it is easy to handle because of forming into a granular shape, and it is satisfactorily dissolved, and thus the humoral pH could be adjusted within a range from neutrality to weak alkalinity by capturing acidic ions. A specific composition, in which satisfactory results were obtained, among these compositions will be described below.

The composition (1) is a composition obtained by mixing with 3 to 0.05%, and preferably 1 to 0.1% of silicic acid (SiO₂), balance being magnesium oxide. The composition (2) is a composition obtained by mixing 2 to 0.01%, and preferably 1 to 0.03% of aluminum oxide (Al₂O₃), balance being magnesium oxide. The composition (3) is a composition obtained by mixing 3 to 0.05% of silicic acid (SiO₂) and 2 to 0.01% of aluminum oxide, balance being magnesium oxide. The composition (4) is a composition obtained by mixing 7 to 0.01%, and preferably 1 to 0.02% of iron oxide (Fe₂O₃), balance being magnesium oxide. The composition (5) is a composition obtained by mixing 3 to 0.05% of silicic acid (SiO₂), 2 to 0.01% of aluminum oxide and 7 to 0.01% of iron oxide (Fe₂O₃), balance being magnesium oxide. The composition (6) is a composition obtained by mixing 15 to 0.1%, and preferably 3 to 0.1% of calcium oxide (CaO), balance being magnesium oxide. The composition (7) is a composition obtained by mixing 3 to 0.05% of silicic acid (SiO₂), 2 to 0.01% of aluminum oxide, 7 to 0.01% of iron oxide (Fe₂O₃) and 15 to 0.1% of calcium oxide (CaO), balance being magnesium oxide. In addition, there may be a composition obtained by mixing 3 to 0.01%, and preferably 1 to 0.02% of boron oxide (B₂ O₃), balance being magnesium oxide, and a composition obtained by further mixing boron oxide with the metal oxides of the above-mentioned compositions (1) to (7), balance being magnesium oxide.

### [Optimum Firing Temperature and Particle Diameter of Slightly Soluble Basic Substance]

Magnesium oxide is commonly produced by firing raw materials of magnesium hydroxide or magnesium carbonate. Thus, a study was made on a firing temperature of raw materials with respect to compositions (1) to (7) each containing the above-mentioned magnesium oxide as a main component. As a result, it has been found that the following advantages are obtained by firing at 1, 500 to 2,300°C. That is, a basic magnesium carbonate is less likely to be formed due to significant decrease in absorbability of carbon dioxide, and it is easy to handle because of forming into a granular shape, and also the thus formed organic acid is captured after moderate dissolution, and thus the humoral pH could be adjusted within a range from neutrality to weak alkalinity. In particular, the product obtained by firing at 1,600 to 2,100°C was significantly satisfactory. The reason is considered as follows. That is, while magnesium oxide is a material having a melting point of 2,800°C, these metal oxides are materials each having a melting point of about 1,700 to 2,600°C, and thus magnesium oxide obtained by mixing these metal oxides can be fired at 1,500 to 2,300°C because of a decrease in a melting point. As a result, such magnesium oxide fired at low temperature becomes a stable oxide due to the crystal growth. To the contrary, magnesium oxide fired at a temperature higher than 2,300°C had a problem that it becomes an oxide having a crystal structure, that is slightly different from an original crystal structure, due to a peroxidation state, and also it becomes less likely to be dissolved, and thus causing deterioration of characteristics of adjusting the humoral pH within a range from neutrality to weak alkalinity by capturing the thus formed organic acid. Magnesium oxide fired at a temperature lower than 1,500°C had a problem that a basic magnesium carbonate is likely to be formed due to absorbability of the dissolved carbon dioxide, and it is inconvenient to handle since it is less likely to be formed into a granular shape.

A particle diameter of magnesium oxide was studied. As a result, it has been found that magnesium oxide obtained by firing the above-mentioned compositions (1) to (7) at 1,500 to 2,300°C and crushing into powders having a particle diameter of 1 to 15 mm, and preferably 2 to 12 mm has an advantage that the humoral pH is adjusted within a range from neutrality to weak alkalinity by capturing the thus formed organic acid after moderate dissolution. The reason is as follows. That is, the particle diameter of more than 15 mm causes a problem that it becomes less likely to be dissolved, leading to deterioration of characteristics of adjusting the humoral pH within a range from neutrality to weak alkalinity by capturing the thus formed organic acid. To the contrary, the particle diameter of less than 1 mm causes a problem that it is inconvenient to handle because of forming into a powder shape.

From these results, a composition (having a particle diameter of 3 to 10 mm) containing 98.70 to 99.10% of MgO, 0.60 to 0.90% of CaO, 0.15 to 0.20% of SiO₂, 0.05 to 0.10% of Fe₂O₃, 0.05 to 0.10% of Al₂O₃, and 0.02 to 0.05% of B₂O₃ was used as a slightly soluble basic substance 14, and an effect confirmation test was performed again using the product fired at 1,800°C and the product fired at 2,000°C.

This effect confirmation test was performed with respect to (1) a thermal-storage solution using city water with initial pH of 5.2, and (2) a thermal-storage solution using an aqueous ethylene glycol solution with pH 5 adjusted by mixing formic acid or glycolic acid. Regarding the thermal-storage solution in which the magnesium-based slightly soluble basic substance was immersed, the pH became 7 to 9 after the test, and satisfactory pH control effect is exerted. Thus, copper constituting the thermal-storage type heat exchanger 22 exhibits satisfactorily corrosion resistance.

### [Composition of Thermal-Storage Solution]

The thermal-storage solution constituting the thermal-storage solution layer 11 may be a thermal-storage medium composed of at least water (including at least water). The thermal-storage solution may be composed only of water, or may contain various additives that are soluble or dispersible in water. In the present embodiment, it is particularly preferred that the thermal-storage solution contains a dihydric alcohol as an anti-freeze agent (coolant). When the thermal-storage solution is an aqueous solution containing a dihydric alcohol, freezing of the thermal-storage solution can be avoided even at a freezing point (0°C at normal temperature under normal pressure) or lower.

Examples of the dihydric alcohol include, but are not limited to, ethylene glycol, propylene glycol, diethylene glycol, butanediol, neopentyl glycol, 3-methylpentadiol, 1,4-hexanediol, and 1,6-hexanediol. Among these dihydric alcohols, ethylene glycol or propylene glycol is preferably used in view of costs and from a viewpoint of using successfully as an anti-freeze agent. These dihydric alcohols may be used alone, or two or more dihydric alcohols may be used in combination. The anti-freeze agent is not limited to the dihydric alcohol, and may be a compound or composition other than the dihydric alcohol.

When a thermal-storage solution mixed with zero-point several % of an antioxidant (for example, sodium nitrite) for preventing oxidation of this dihydric alcohol is replaced by the thermal-storage solution which is an aqueous solution containing a dihydric alcohol, the amount of an organic acid formed is further reduced, and thus making it possible to still more ensure corrosion resistance of a heat exchanger. Even if using, as the antioxidant, vitamin C (ascorbic acid), vitamin E (tocopherol), dibutylhydroxytoluene (BHT), butylhydroxyanisole (BHA), sodium erythorbate, a coffee bean extract (chlorogenic acid), a green tea extract (catechin), or a rosemary extract, similar effect can be obtained, and there is no particular limitation on specific type or amount.

There is also no particular limitation on specific type of the additive to be added to the thermal-storage solution, and it is possible to use, in addition to anti-freeze agents, various additives known in the field of the thermal-storage material composition, such supercooling inhibitors, thickeners, heat transfer accelerators, moisture evaporation inhibitors, corrosion inhibitors, anti-rust agents (when the thermal-storage container 21 is made of metal). There is also no particular limitation on addition amount and addition method of these additives, and amount in a known range or technique can be used.

The composition of the thermal-storage solution (2) constituting the thermal-storage solution layer 11 used in the above-mentioned effect confirmation test will be described. The thermal-storage solution with the concentration of 30% ethylene glycol has characteristics in which a boiling point is 103°C and a freezing temperature is -15°C. Examples of the addition solution to be added in a trace amount include azoles (for example, benzotriazole, mercaptobenzotriazole, tolyltriazole, etc.) as anti-rust agents of copper, anti-mold agents (for example, sodium benzoate, etc.), and antioxidants (for example, sodium nitrite, etc.) for preventing ethylene glycol.

These effect confirmation tests were also performed with respect to (3) a mixed solution (having a boiling point of 130°C and a freezing temperature of -43°C) of 85% of ethylene glycol and 15% of water, (4) a mixed solution (having a boiling point of 120°C and a freezing temperature of -53°C) of 85% of propylene glycol and 15% of water, and (5) a mixed solution (having a boiling point of 102°C and a freezing temperature of -15°C) of 30% of propylene glycol and 70% of water. The thermal-storage solution containing a magnesium-based slightly soluble basic substance 14 immersed therein has satisfactory pH control effect since the pH became 7 to 9 after the test, and thus copper constituting the thermal-storage type heat exchanger 22 exhibited satisfactorily corrosion resistance. In such effect confirmation test, when using a thermal-storage solution prepared by mixing a dihydric alcohol such as ethylene glycol or propylene glycol with an antioxidant for preventing oxidation of the dihydric alcohol (for example, sodium nitrite), an advantage capable of reducing the amount of an organic acid was obtained, and also satisfactory pH control effect and corrosion resistance of a heat exchanger (made of copper) were obtained.

While the present invention has been specifically described by way of Examples and Comparative Examples, the present invention is not limited thereto. Various modifications, alterations and variations can be made by persons skilled in the art without departing from the spirit or scope of the present invention.

### (Second Embodiment)

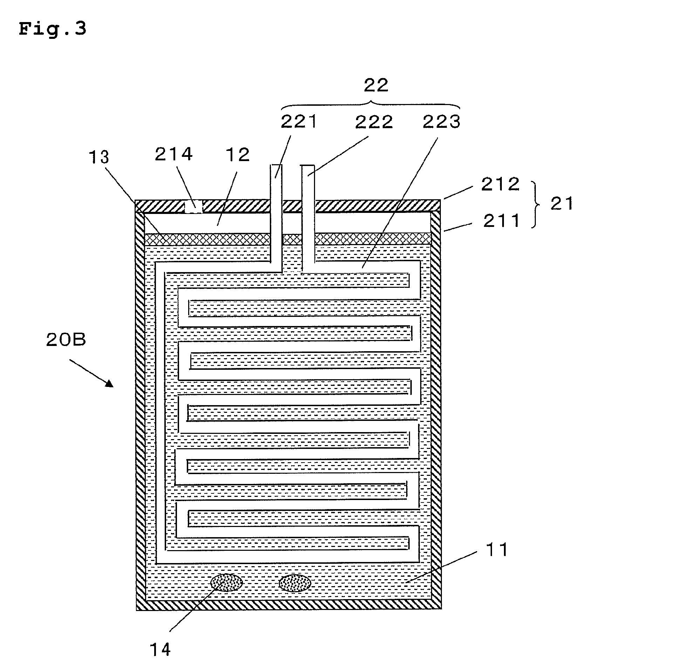

In the first embodiment, the thermal-storage device 20A has a configuration in which a thermal-storage solution layer 11 is formed in the thermal-storage container 21, and also an air layer 12 is laminated above the layer according to the application. While, in the second embodiment, as shown in Fig. 3, an evaporation prevention layer 13, that prevents or suppressed the thermal-storage solution from being evaporated, is further disposed between the thermal-storage solution layer 11 and the air layer 12.

### [Layer Configuration in Thermal-Storage Container]

As shown in Fig. 3, while a thermal-storage device 20B according to the present embodiment has a configuration identical to that of the thermal-storage device 20A according to the first embodiment, a thermal-storage solution layer 11, an evaporation prevention layer 13 and an air layer 12 are formed in order from the bottom in a thermal-storage container 21.

The evaporation prevention layer 13 is a layer that prevents or suppresses evaporation of the thermal-storage solution constituting the thermal-storage solution layer 11 (layer that realizes the evaporation prevention function) and it is possible to use various oils that are in the form of liquid at normal temperature (organic solvents composed of a solvent composition of at least one water-insoluble solvent). It is possible to preferably use, as an example of the material of the evaporation prevention layer 13, a solvent composition in which a water-insoluble solvent accounts for 85 or more and little less than 100% (% by weight), balance being composed of a mixture of additives such as an antioxidant. Not showing in Fig. 3, the evaporation prevention layer 13 may be a plurality of layers. When two or more evaporation prevention layers 13 are formed, each evaporation prevention layer 13 may be composed of a solvent composition having a different composition and may be independently formed without being mixed with each other, or may be composed so that evaporation prevention layers 13 are mixed with each other.

The water-insoluble solvent used in the solvent composition may be a non-polar solvent that has substantially no polarity, or a low polar solvent that has low polarity so as to form a single layer isolated from an aqueous layer without being substantially mixed with water at normal temperature, and it may be in a liquid form in at least a normal temperature range (it may be liquid). Specific examples of the water-insoluble solvent include, but are not limited to, saturated alkanes such as pentane, hexane, heptane, octane, nonane, decane, undecane, dodecane, tridecane, tetradecane, pentadecane, hexadecane, heptadecane, and cyclohexane; aromatic alkanes such as toluene, xylene, and benzene; haloalkanes such as 1,2-dichloroethane, 1,1,2-trichloroethane, trichloroethylene, chloroform, monochlorobenzene, carbon tetrachloride, and methylene chloride (dichloromethane); esters such as methyl acetate, ethyl acetate, and isopropyl acetate; ethers such as diethyl ether, isopropyl ether, ethyl tert-butyl ether, and furan; mineral oils such as poly-alpha-olefin wax, paraffin wax, and silicone oil; edible fats and oils, such as corn oil, soybean oil, sesame oil, rapeseed oil, rice oil, camellia oil, safflower oil, palm kernel oil, coconut oil, cottonseed oil, sunflower oil, perilla oil, olive oil, peanut oil, almond oil, grapeseed oil, mustard oil, and fish oil; and industrial fats and oils, such as castor oil and tung tree oil. These water-insoluble solvents may be used alone, or two or more water-insoluble solvents may be used in combination. When the solvent composition contains plural types of water-insoluble solvent, the composition of each solvent is not particularly limited as long as the effective evaporation prevention function can be realized.

### [Optimum Composition of Evaporation Prevention Layer]

In the present embodiment, particularly preferable evaporation prevention layer 13 is a layer composed of a composition in which a solvent composition has a melting point of lower than normal temperature (lower than ambient temperature) and it is possible to exemplify a composition containing at least any one of hydrocarbons having carbon atoms within a range from 24 to 44. The hydrocarbons constituting the water-insoluble solvent are chain or alicyclic saturated alkanes (or chain or alicyclic hydrocarbons that are almost saturated alkanes, hereinafter referred to as saturated alkanes). Specifically, poly-alpha olefin wax containing a component having carbon atoms within the above range, paraffin wax and mineral oil can be exemplified. Use of the evaporation prevention layer 13 with this composition made it possible to obtain an advantage capable of reducing corrosion of a thermal-storage type heat exchanger 22, and an advantage capable of further preventing or suppressing evaporation of a thermal-storage solution constituting the thermal-storage solution layer 11.

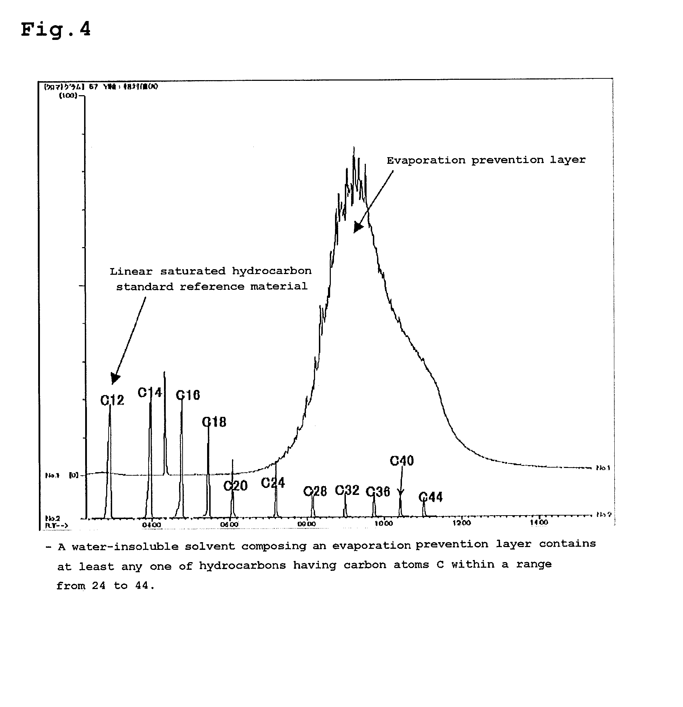

Fig. 4 shows analytical results of the composition of the examined evaporation prevention layer 13 obtained by a GC-MS analyzer using a water-insoluble solvent, and the composition is found to be a composition containing at least any one of hydrocarbons having carbon atoms within a range from 24 to 44.

A carbon structure of this water-insoluble solvent will be described. Generally speaking, saturated alkanes (also referred to as saturated hydrocarbon) are in the form of a gas at normal temperature in the case of having 4 or less carbon atoms, a liquid at normal temperature in the case of having about 5 to 18 carbon atoms, or a solid at normal temperature in the case of having more than about 18 carbon atoms. Regularity of this general rule is established for saturated alkanes having a linear structure that is composed of linearly arranged carbon atoms and is free from branching. Branched saturated alkanes are in a liquid form at normal temperature even in the case of having more than about 18 carbon atoms. For example, when α-olefin having 8 to 10 carbon atoms (an unsaturated alkene having a structure that has a double bond at the end and has a single bond at other moieties) is subjected to a hydrogenation treatment after a polymerization reaction, saturated alkanes containing at least any one of hydrocarbons having carbon atoms within a range from 24 to 44 are formed. Moreover, the saturated alkanes have been converted into saturated alkanes having a large amount of branching by devising the polymerization reaction, and thus the saturated alkanes are in a liquid form at normal temperature. Synthetic oil or semi-synthetic oil and mineral oil to be used in the present embodiment are used after mixing with 85 or more and little less than 100% (% by weight) of a water-insoluble solvent obtained by using this production process.

It is difficult for the hydrocarbon having carbon atoms within the above number range to control the number of carbon atoms by current technology, and thus the number of carbon atoms is often controlled by letting things take their course. Therefore, a hydrocarbon having less than 24 carbon atoms is likely to form saturated alkanes having a linear structure, leading to a problem that a liquid having high volatility is formed and is immediately evaporated, resulting in short lifetime. To the contrary, a hydrocarbon having 45 or more carbon atoms is likely to turn into a solid form at normal temperature, leading to a problem that it is hard to handle. As mentioned above, because of long lifetime due to less evaporation, liquid form at normal temperature and easy handling, a composition containing at least any one of hydrocarbons having carbon atoms within a range from 24 to 44 was used as a water-insoluble solvent. In addition, this water-insoluble solvent is less likely to form an organic acid and exhibits high air tightness, and thus having an advantage that evaporation of the thermal-storage solution is prevented or suppressed, and oxygen in air is less likely to penetrate into the thermal-storage solution.

### [Effect Verification of Corrosion Reduction Effect of Evaporation Prevention Layer]

The effect verification method and the results thereof will be specifically described by way of Examples. This effect verification method is different from effect verification method in the above-mentioned first embodiment in that an evaporation prevention layer 13 is disposed between a thermal-storage solution layer 11 and an air layer 12, and that a thermal-storage solution, prepared by preliminarily mixing deionized water with a very small amount of a magnesium solution thereby adjusting to initial pH 7.0, was injected to form a thermal-storage solution layer 11, and that a solid component of a magnesium oxide-based slightly soluble basic substance 14 is not immersed. Although immersion of the solid component of the magnesium oxide-based slightly soluble basic substance 14 in a thermal-storage solution causes variation in water quality pH of the thermal-storage solution, the solid component of the slightly soluble basic substance 14 is not immersed in this effect verification. Therefore, an influence of an organic acid formed from the evaporation prevention layer 13 on the water quality pH could be clarified.

Various evaluations in Examples and Comparative Examples were performed by the following manners. In an effect confirmation test, each of various evaporation prevention layers 13 was laminated on a thermal-storage solution with the initial pH 7.0 and the test was performed under predetermined conditions (at 20°C for 2 weeks, then at 100°C for 2 weeks). Then, characteristics before and after the test were evaluated. The evaluated characteristics are the evaporation prevention effect of the thermal-storage solution, and the pH of the thermal-storage solution before the test (initial) and after the test. The test results are evaluated by four criteria of "Excellent", "Satisfactory", "Insufficient" and "Very poor" based on the measurement values of characteristics, and each is indicated by the following symbols "A" "B" "C" and "D".

The evaporation prevention effect of the thermal-storage solution is evaluated by the value obtained by dividing each weight loss of a thermal-storage solution layer 11 and an evaporation prevention layer 13 under predetermined conditions by a product of a unit area of the evaporation prevention layer 13 and a test period. As this value becomes larger, each weight of the thermal-storage solution layer 11 and the evaporation prevention layer 13 significantly decreases. Therefore, the large value means that the evaporation prevention effect of the thermal-storage solution is not exerted. To the contrary, as this value becomes smaller, each weight of the thermal-storage solution layer 11 and the evaporation prevention layer 13 scarcely decreases. Therefore, the small value means that excellent evaporation prevention effect of the thermal-storage solution is exerted. Weight loss at 20°C of 3 mg/cm²·day or less was rated "A", weight loss at 20°C of 3 to 6 mg/cm²·day was rated "B", weight loss at 20°C of more than 6 to 10 mg/cm²·day was rated "C", and weight loss at 20°C of 10 mg/cm²·day or more was rated "D". Weight loss at 100°C of 0.1 g/cm²·day or less was rated "A", weight loss at 100°C of 0.1 to 0.2 g/cm²•day was rated "B", weight loss at 100°C of 0.2 g/cm²•day to 0.3 g/cm²·day or less was rated "C", and weight loss at 100°C of more than 0.3 g/cm²·day was rated "D".

The pH of the solution is determined by measuring the humoral pH of a thermal-storage solution before the test (initial) and after the test. The suppression effect of an organic acid is the item to be evaluated by confirming the pH decrease that occurs depending on the amount of an organic acid formed from an evaporation prevention layer 13. As the amount of the organic acid formed becomes larger, the pH tends to decrease and shift to the acidic side. In this test, this tendency is used. Since the pH before the test (initial) is identical to 7.0, evaluation is performed by the pH after the test. That is, the pH of 6.5 to 7.0 was rated "A", the pH of 6.0 or higher and lower than 6.5 was rated "B", the pH of 5.5 or higher and lower than 6.0 was rated "C", and the pH of lower than 5.5 was rated "D".

In comprehensive judgment, the respective evaluation items of the evaporation prevention effect of a thermal-storage solution and the suppression effect of an organic acid were comprehensively evaluated. If all evaluation items are rated "A" without including "B", "C" or "D", rating "A" was awarded in the comprehensive judgment. If evaluation items are rated "B" or "A" without including "C" or "D", rating "B" was awarded in the comprehensive judgment. If any one of evaluation items is rated "C", rating "C" was awarded in the comprehensive judgment even if including "A" and "B". If any one of evaluation items is rated "D", rating "D" was awarded in the comprehensive judgment even if including "A", "B" or "C".

The evaporation prevention layer 13 used in the examination is as follows.

### (Example A of the Present Invention)

The evaporation prevention layer 13 is Example using a composition in which a solvent composition has a melting point of lower than normal temperature and a water-insoluble solvent contains at least one of hydrocarbons having carbon atoms within a range from 24 to 44. The evaporation prevention layer 13 is composed of a composition having a pour point (i.e., a freezing point) of -31°C and a decomposition initiation temperature of 260°C. Fig. 4 shows analytical results of the water-insoluble solvent of this composition obtained by a GC-MS analyzer. A thermal-storage solution using deionized water with the initial pH of 7.0 was injected into a thermal-storage container and the evaporation prevention layer 13 was laminated on the upper portion thereof, and then a test was performed under predetermined conditions and characteristics were evaluated. The summarized results are shown in Table 2.

### (Conventional Example A)

In the same manner as in Example A, except that a C₁₅H₃₂ saturated hydrocarbon was used as the evaporation prevention layer 13, each evaluation was performed. The results are shown in Table 2. This evaporation prevention layer 13 is composed of a composition having a melting point of 10°C and a boiling point of 270°C.

### (Conventional Example B)

In the same manner as in Example A, except that silicone oil was used as the evaporation prevention layer 13, each evaluation was performed. The results are shown in Table 2. This evaporation prevention layer 13 is composed of a composition having a pour point of -40°C and a decomposition initiation temperature of 250°C.

### (Conventional Example C)

In the same manner as in Example A, except that fats and oils (fatty acid ester) were used as the material of the evaporation prevention layer 13, each evaluation was performed. The results are shown in Table 2. This evaporation prevention layer 13 is composed of a composition having a pour point of -20°C and a decomposition initiation temperature of 200°C.

### (Comparative Example I)

In the same manner as in Example A, except that a C₂₃H₄₈ saturated hydrocarbon was used as the material of the evaporation prevention layer 13, each evaluation was performed. The results are shown in Table 1. This evaporation prevention layer 13 is composed of a composition having a melting point of 46°C and a boiling point of 200°C.

### (Comparative Example II)

In the same manner as in Example A, except that a C₁₀₀ ethylene resin was used as the material of the evaporation prevention layer 13, each evaluation was performed. The results are shown in Table 1. This evaporation prevention layer 13 is composed of a polymer resin having a melting point of 80°C and a decomposition initiation temperature of 160°C. Sine a C45 hydrocarbon cannot be obtained by current technology, the polymer resin was used as a substitute for the C45 hydrocarbon in the evaluation.

### (Evaluation Results of the Present Invention)

Each of various evaporation prevention layers 13 was laminated on a thermal-storage solution using deionized water with the initial pH 7.0 and then a test was performed under predetermined conditions (at 20°C for 2 weeks, then at 100°C for 2 weeks). The results are summarized in Table 2.

**Table 2**

| Division | | | | Present Invention A | Conventional Example A | Conventional Example B | Conventional Example C | Comparative Example I | Comparative Example II |
|---|---|---|---|---|---|---|---|---|---|
| Type of hydrocarbon (expressed by the number of carbon atoms C) | | | | C24-C44 hydrocarbon | C15 saturated hydrocarbon | Silicone oil | Fats and Oils (Fatty acid ester) | C23 hydrocarbon | C1000 ethylene resin |
| Physical properties | | Power point/Melting point (°C) | | -31°C (Power point) | 10°C (Melting point) | -40°C (Power point) | -20°C (Power point) | 46°C (Melting point) | 80°C (Melting point) |
| | | Decomposition initiation temperature/ Boiling point (°C) | | 260°C (Decomposition initiation temperature) | 270°C (Boiling point) | 250°C (Decomposition initiation temperature) | 200°C (Decomposition initiation temperature) | 200°C (Boiling point) | 160°C (Decomposition initiation temperature) |
| Evaporation prevention effect of solution | | | 20°C | A | C | B | B | D | D |
| | | | 100°C | A | D | C | D | C | D |
| Solution pH | | | Before test | 7.0 | 7.0 | 7.0 | 7.0 | 7.0 | 7.0 |
| | | | After test | 6.9 | - | 6.4 | 5.4 | 6.9 | 7.0 |
| | Suppression effect of organic acid | | | A | - | B | D | A | A |
| Comprehensive judgment | | | | A | D | C | D | D | D |

| | | | | | | | | | |
|---|---|---|---|---|---|---|---|---|---|
| A: Excellent B: Satisfactory C: Insufficient D: Very Poor | | | | | | | | | |

I Example A of the present invention, both the evaporation prevention effect of a thermal-storage solution and the suppression effect of an organic acid are excellent because of using, as the material of the evaporation prevention layer 13, a composition in which a solvent composition has a melting point of lower than normal temperature and a water-insoluble solvent contains at least any one of hydrocarbons having carbon atoms within a range from 24 to 44.

In Conventional Examples A to C, since the evaporation prevention effect of a thermal-storage solution, particularly the evaporation prevention effect at 100°C was insufficient and rated "D" or "C", rating "D" or "C" was awarded in the comprehensive judgment. For example, in Conventional Example A, the evaporation prevention effect was rated "C" as a result of testing at 20°C for 2 weeks. Although a thermal-storage solution layer still remains at 20°C, the evaporation prevention effect was rated "D" since a thermal-storage solution layer and an evaporation prevention layer were entirely evaporated as a result of testing at 100°C for 2 weeks. In Conventional Examples B and C, although the evaporation prevention effect was rated "B" at 20°C, the effect was rated "C" or "D" at 100°C and was insufficient. On the other hand, in Comparative Examples I and II, since the evaporation prevention effect of a thermal-storage solution was rated "D", rating "D" was awarded in the comprehensive judgment. For example, in Comparative Example I, gaps are likely to be formed at 20°C because of having a melting point of 46°C, so that the evaporation prevention effect was rated "D". Although dissolution was observed at 100°C, the evaporation prevention effect was rated "C" and was insufficient. In Comparative Example II, gaps are likely to be formed at 20°C because of having a melting point of 80°C, so that the evaporation prevention effect was rated "D". Although dissolution was observed at 100°C, dissolution was observed in a form of many gaps, so that the evaporation prevention effect was rated "D" and was insufficient.

A description will be made on the reason why the water-insoluble solvent used as the material of the evaporation prevention layer 13 in Example A of the present invention thermal-storage type heat exchanger 22 can further reduce corrosion. As shown in the above-mentioned Fig. 2, copper used in the thermal-storage heat exchanger 22 causes elution of lots of copper ions as the pH of the aqueous solution shifts to the more acidic side. Therefore, it is desired that the water-insoluble solvent used in the evaporation prevention layer 13 is a material that is less likely to form an organic acid. The organic acid has a property of being formed in a large amount from α-olefin, while being formed in a small amount from saturated alkanes. As for a water-insoluble solvent of this composition used in the evaporation prevention layer 13, it may be saturated alkanes (or hydrocarbons that are almost saturated alkanes), and thus forming a small amount of an organic acid and enabling the pH of the thermal-storage solution to be less likely to shift to the acidic side.

Copper used in the thermal-storage type heat exchanger 22 undergoes corrosion and cause elution of lots of copper ions as dissolved oxygen increases due to penetration of oxygen in air into the thermal-storage solution. Therefore, it is desired that the water-insoluble solvent used in the evaporation prevention layer 13 is a material in which oxygen in air is less likely to penetrate into the thermal-storage solution, and oxygen in air as a property of being less likely to penetrate into the thermal-storage solution in the case of sufficient airtight sealing. As for the water-insoluble solvent used in the evaporation prevention layer 13, it is a liquid at normal temperature, leading to sufficient airtight sealing, and thus oxygen in air is less likely to penetrate into the thermal-storage solution. From such a point of view, this water-insoluble solvent has an advantage capable of further reducing corrosion of the thermal-storage type heat exchanger 22.

The solvent composition may contain, in addition to the water-insoluble solvent, known other components. Specifically, antioxidants, corrosion inhibitors, anti-rust agents and defoamers can be exemplified. There is also no particular limitation on addition amount and addition method of these additives, and amount in a known range or technique can be used. There is no particular limitation on specific composition of the solvent composition. In the present embodiment, as mentioned above, it is possible to preferably exemplify a configuration in which the amount of at least one water-insoluble solvent is within a range of 85 or more and little less than 100% (% by weight), balance being composed of a mixture containing additives (within a range of little less than 15% by weight). Needless to say, the composition can be appropriately designed according to various conditions such as performances required to the evaporation prevention layer 13, and operating environment of the thermal-storage device 20B.

There is no particular limitation on temperature conditions of the solvent composition, and the solvent composition is preferably a liquid within a range of normal temperature (5 to 35°C) and, therefore, the pour point is preferably lower than normal temperature. As mentioned below, the pour point of the solvent composition is preferably lower than a solidifying point of the thermal-storage solution. Even if the temperature of the thermal-storage device 20B decreases until the thermal-storage solution is solidified, the solvent composition can retain fluidity, and thus enabling effective realization of evaporation prevention function even in a state of low temperature. Even if the thermal-storage solution is solidified, the solvent composition is not yet solidified, and thus making it possible to reduce volume expansion caused by solidification of the thermal-storage solution, and to still further ensure the pressure relaxation function. In particular, the solvent composition containing a hydrocarbon having carbon atoms within a range from 24 to 44 provides an advantage capable of more satisfactorily maintaining fluidity at low temperature of the evaporation prevention layer 13.

As mentioned above, formation of the evaporation prevention layer 13 in the thermal-storage container 21 enables an improvement in the evaporation prevention function of the thermal-storage solution layer 11. Therefore, the thermal-storage solution can be stably stored in the thermal-storage container 21, and thus a thermal-storage device 20B having excellent handling properties can be obtained. In addition, evaporation of the thermal-storage solution layer 11 is suppressed by the evaporation prevention layer 13, and thus making it possible to maintain satisfactory thermal-storage characteristics over the long period without requiring replenishment. Furthermore, an organic acid is formed in a small amount from the water-insoluble solvent of this composition and also oxygen in air is less likely to penetrate into a thermal-storage solution. Since this enables an improvement in lifetime of a magnesium-based slightly soluble basic substance, humoral pH of a thermal-storage solution layer is maintained in a range from neutrality to weak alkalinity over the long period by capturing acidic ions that cause corrosion, leading to neutralization, and thus making it possible still more ensure reduction in corrosion of the heat exchanger 22.

Therefore, both the thermal-storage solution layer 11 and the evaporation prevention layer 13 may be composed of a composition prepared by mixing a plurality of components according to a specific formulation. In this case, the thermal-storage solution layer 11 is composed of a thermal-storage solution composition containing water, and the evaporation prevention layer 13 is composed of a solvent composition containing a hydrocarbon having carbon atoms within a range from 24 to 44.

### (Third Embodiment)

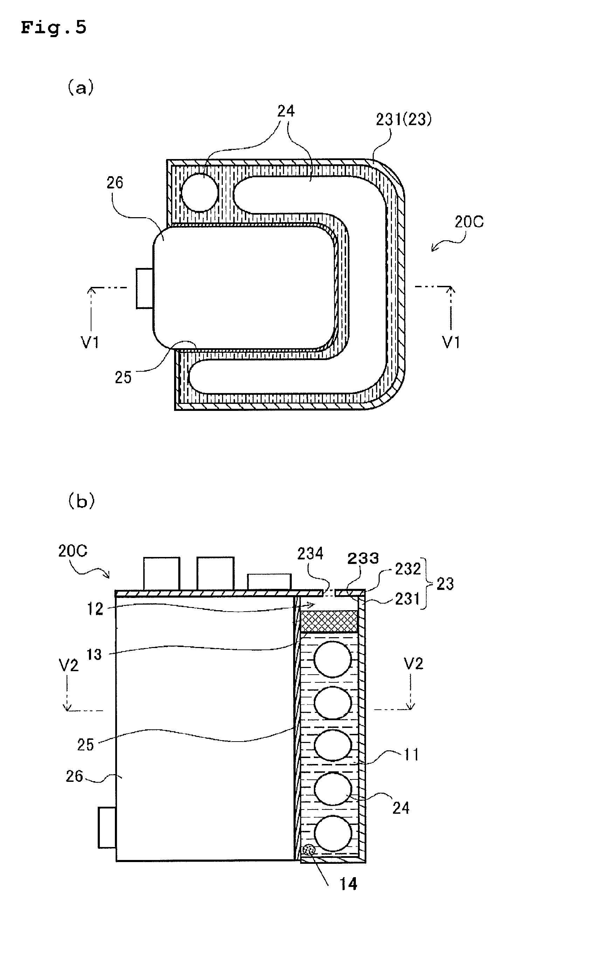

While both the thermal-storage devices 20A according to the first embodiment and the thermal-storage devices 20B according to the second embodiment are composed of the thermal-storage container 21 and the thermal-storage type heat exchanger 22, a thermal-storage device 20C according to the present third embodiment is further provided with a heat source 26 and is configured to enable thermal storage of waste heat of the heat source 26. The configuration will be specifically described with reference to Figs. 5(a) and 5(b).

As shown in Fig. 5 (a) and 5(b), the thermal-storage device 20C according to the present embodiment 20C is provided with, in addition to the thermal-storage container 23 and the thermal-storage type heat exchanger 24, a thermal conductive member 25 and a compressor 26 as a heat source. A cross section taken along line V1-V1 in Fig. 5 (a) corresponds to a longitudinal cross-sectional view of the thermal-storage device 20C shown in Fig. 5(b). A cross section taken along line V2-V2 in Fig. 5(b) corresponds to a transverse cross-sectional view of the thermal-storage device 20C shown in Fig. 5(a).

Similar to the thermal-storage container 21 in the first embodiment, the thermal-storage container 23 includes a box portion 231 and a cover portion 232, and a cover portion 232 is attached so as to close an upper opening 233 of the box portion 231. Similar to the box portion 231 in the first or second embodiment, the box portion 231 has substantially approximately rectangular shape. However, unlike the box portion 211, the interior space for storing a thermal-storage solution therein has an approximately U-shaped cross section so as to surround the side of the compressor 26 as shown in Fig. 5. As shown in Fig. 1 or Fig. 3, a thermal-storage type heat exchanger 24 is provided inside the box portion 231, and a thermal-storage solution layer 11 is formed so as to immerse most of the thermal-storage solution layer. An evaporation prevention layer 13 is laminated above the thermal-storage solution layer 11, and also an air layer 12 is formed above the evaporation prevention layer 13 by outside air that flow into the space via a vent hole 234 provided in the cover portion 232.

The compressor 26 allows a refrigerant used in an air conditioner to undergo compression, and a compressor having a known configuration is used. In Figs. 5(a) and 5(b), only an external form of the compressor 26 is schematically shown for the convenience sake of the description. In the present embodiment, as shown in Figs. 5 (a) and 5 (b), the external form of the compressor 26 has the approximately rectangular shape, and a thermal-storage container 23 is located so as to surround three sides of four side of the rectangular shape. Since the interior space of the thermal-storage container 23 (box portion 211) has an approximately U-shaped cross section as mentioned above, the compressor 26 is located at the region that serves as a recessed site in the U-shaped cross section, whereby, at least a part of the periphery of the compressor 26 is surrounded by the thermal-storage container 23.

As mentioned above, when the thermal-storage container 23 is located at the periphery of the compressor 26, the compressor 26 and the thermal-storage container 23 are substantially integrated. Therefore, waste heat generated in the compressor 26 scarcely escapes outside of the thermal-storage container 23 and is transferred to the thermal-storage solution layer 11 inside thermal-storage container 23. Therefore, the compressor 26 as the external device can be used as a heat source and waste heat from the compressor 26 can be efficiently stored.

It is particularly preferred that a layered thermal conductive member 25 is provided between the side of the compressor 26 and the thermal-storage container 23. The compressor 26 may be directly in contact with the thermal-storage solution layer 11 inside the thermal-storage container 23. In this case, it is necessary that a waterproof treatment is applied to the side of the compressor 26. The shape of the thermal-storage container 23 may be configured to have an approximately U-shaped cross section according to the compressor 26. However, in addition to an increase in costs due to complicated processing of the thermal-storage container 23, it becomes difficult to increase adhesion between an external surface of the thermal-storage container 23 and the side of the compressor 26. Therefore, like the present embodiment, the thermal conductive member 25 is preferably provided.

There is no particular limitation on specific configuration of the thermal conductive member 25 as long as the periphery the periphery of the compressor 26 can be covered and also heat from the compressor 26 can be satisfactorily transferred to the thermal-storage solution layer 11. Specific examples of the thermal conductive member include a metal sheet formed of copper, silver, aluminum or an alloy thereof; a thermal conductive sheet in which particles of graphite or metal are dispersed in a resin composition; and a thermal conductive grease in which particles of graphite or metal are dispersed in a gel-like composition.

As mentioned above, heat from the compressor 26 can be satisfactorily recovered through a thermal-storage device 20C by contacting the thermal-storage container 23 with the compressor 26 via the thermal conductive member 25. In particular, when the thermal conductive member 25 is a thermal conductive sheet, selection of a flexible material, for example, an elastomer material such as an ethylene-propylene-diene rubber (EPDM) or a silicone rubber, as a resin composition, enables satisfactory contact between the compressor 26 and the thermal-storage container 23 even if irregularity exists on the side of the compressor 26, and thus enabling still more smooth thermal conduction from the compressor 26 to thermal-storage container 23.

Also in the present embodiment, the evaporation prevention layer 13 described in the second embodiment is formed in the thermal-storage container 23. Therefore, since these layers enable satisfactorily realization of all of the evaporation prevention function, the leakage prevention function and the pressure relaxation function, it is possible to stably store a thermal-storage solution in the thermal-storage container 23, and thus obtaining a thermal-storage device 20C having excellent handling properties.

While the compressor 26 was exemplified as the heat source in the present embodiment, the heat source is not limited thereto and may be the other heat source included in an apparatus such as an air conditioner to which the thermal-storage device 20C according to the present invention is applied. The heat source may be provided outside the thermal-storage solution layer 11 and is not necessarily provided outside the thermal-storage container 23. The periphery of the heat source may not be surrounded by the thermal-storage container 23. For example, as long as the compressor 26 has a wide flat side, the heat source may be configured to bring a flat surface of the thermal-storage solution layer 11 into contact with a flat surface of the compressor. In the present embodiment, the periphery of the compressor 26 is surrounded by the thermal-storage container 23, and the bottom surface or top surface of the compressor 26 may be surrounded thereby. The heat source may be other than the compressor 26.

### (Fourth Embodiment)

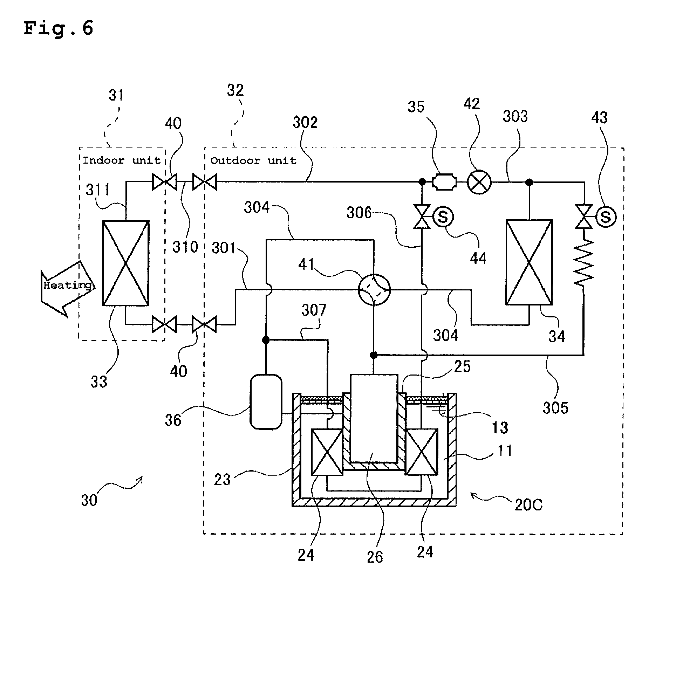

While the above first to third embodiments exemplify configurations of a thermal-storage device, in the present embodiment, an example of an air conditioner as a typical application example of the thermal-storage device having the above configuration will be described in detail with reference to Fig. 6.

As shown in Fig. 6, an air conditioner 30 according to the present embodiment includes an indoor unit 31 and an outdoor unit 32 which are connected to each other via a refrigerant pipe. The outdoor unit 32 is provided with the thermal-storage device 20C according the third embodiment. The indoor unit 31, the outdoor unit 32, and an external pipe 310 are connected to an indoor unit internal pipe 311, and a first pipe 301 and a second pipe 302 as an outdoor unit internal pipe via a pipe coupling 40.

The indoor unit 31 is provided therein with an indoor unit internal pipe 311, indoor heat exchanger 33, and the like and the outdoor unit 32 is provided therein with a thermal-storage device 20C, a compressor 26, various internal pipes of the outdoor unit, an outdoor heat exchanger 34, various valve members, and the like. Then, since the indoor unit 31 and the outdoor unit 32 are connected to each other via the external pipe 310 as mentioned above, a refrigeration cycle of the air conditioner 30 is structured with the above configuration. In the following description, within the refrigerant pipe (e.g., the indoor unit internal pipe 311, the external pipe 310, and various internal pipes of an outdoor unit), an upstream side or a downstream side in a refrigerant flowing direction are simply referred to as an upstream side or a downstream side.

A configuration of the indoor unit 31 will be described in detail below. The indoor unit internal pipe 311 connected to the external pipe 310 is further connected to an indoor heat exchanger 33. Further, the indoor unit 31 is provided therein with a blower fan (not shown), upper and lower blades (not shown), and right and left blades (not shown), in addition to the indoor heat exchanger 33.

The indoor heat exchanger 33 performs a heat exchange between indoor air absorbed into the indoor unit 31 by a blower fan and the refrigerant flowing in the indoor heat exchanger 33 and blows out the air warmed by the heat exchange into a room during heating period (in a direction of a block arrow in the drawing), whereas, blows out air cooled by the heat exchange into the room during cooling period. The upper and the lower blades change a direction of air blown out from the indoor unit 31 to up-and-down direction as required and the right and left blades change a direction of air blown out from the indoor unit 31 to right-and-left direction as required. Detailed description of a configuration of the indoor unit 31 (e.g., the blower fan, the upper and lower blades, and the right and left blades) is omitted in Fig. 6 for the convenience sake of description.

A configuration of the outdoor unit 32 will be described in detail below. The outdoor unit 32 is provided therein with a strainer 35, an expansion valve 42, a four way valve 41, a first electromagnetic valve 43, a second electromagnetic valve 44, and an accumulator 36, in addition to the compressor 26, the thermal-storage device 20C, and the outdoor heat exchanger 34. In the first pipe 301 and the second pipe 302 connected to the external pipe 310, the first pipe 301 is connected to an exhaust port (not shown) of the compressor 26. Therefore, the compressor 26 is connected to the indoor heat exchanger 33 in the indoor unit 31.

The compressor 26 is provided, as described in the third embodiment, substantially integral with the thermal-storage container 23 of the thermal-storage device 20C and is further provided with the thermal-storage solution layer 11 in a manner positioned therearound via the thermally conductive member 25. The evaporation prevention layer 13 is formed on an upper surface of the thermal-storage solution layer 11. In Fig. 6, for the convenience sake of the description, a cover portion 232 and the air layer 12 constituting the thermal-storage container 23 are omitted from the illustration. The thermal-storage container 23 is provided therein with the heat regenerator 24 so as to be immersed in the thermal-storage solution layer 11 and an inlet (not shown) is connected to a sixth pipe 306. The sixth pipe 306 is provided with the second electromagnetic valve 44.

In the first pipe 301 and the second pipe 302 which are connected to the external pipe 310, the second pipe 302 is branched into a third pipe 303 and the sixth pipe 306 as the outdoor unit internal pipes. The second pipe 302 is provided with the strainer 35 and, as mentioned above, is connected to the external pipe 310 at one side and connected to the third pipe 303 via the expansion valve 42 at the other side. The sixth pipe 306 is branched from the second pipe 302 in an upstream side of the strainer 35.

The third pipe 303 establishes a connection between the expansion valve 42 and the outdoor heat exchanger 34 which is connected to an intake (not shown) of the compressor 26 via the fourth pipe 304. A side of the compressor 26 in the fourth pipe 304 is provided with the accumulator 36 for separating the liquid phase refrigerant from the vapor phase refrigerant. An exhaust portion of the compressor 26 is connected to the first pipe 301 as well as a fifth pipe 305 is branched from somewhere between the exhaust portion of the compressor 26 in the first pipe 301 and the four way valve 41. A first electromagnetic valve 43 is provided on a fifth pipe 305. The first pipe 301 is disposed at an intermediate position between the exhaust port of the compressor 26 and the indoor heat exchanger 33 and in a side of the outdoor unit 32.

The sixth pipe 306 branched from the second pipe 302 is connected, as mentioned above, to an inlet (not shown) of the heat regenerator 24, whereas, an outlet (not shown) of the heat regenerator 24 is connected to the fourth pipe 304 via a seventh pipe 307. The seventh pipe 307 is branched from the fourth pipe 304 at a position in an upstream side viewed from the accumulator 36.

The first pipe 301 and the fourth pipe 304 are connected to each other via the four way valve 41 at an intermediate portion therebetween. More specifically, the first pipe 301 is provided with the four way valve 41 in an upstream side of a position wherefrom a fifth pipe 305 is branched and the fourth pipe 304 is provided with the four way valve 41 at a position in an upstream side of a position wherefrom the seventh pipe 307 is branched and in a downstream side from a position to be connected to the outside heat exchanger 34.

In the outdoor unit internal pipes, the fourth pipe 304 constitutes the heat pump circulating passage and the fifth pipe 305 and the sixth pipe 306 constitute a refrigerant bypass path. In other words, the air conditioner 30 according to the present embodiment has a configuration of a heat pump type. With the configuration, as mentioned below, the heating operation can be performed in parallel with a defrosting operation without being stopped. This point is mentioned hereinafter.

A configuration of each device or each member except for the compressor 26 and the thermal-storage device 20C (e.g., the refrigerant pipe, the pipe coupling 40, the indoor heat exchanger 33, the blower fan, the upper and lower blades, the right and left blades, the outdoor heat exchanger 34, the strainer 35, the expansion valve 42, the four way valve 41, the first electromagnetic valve 43, the second electromagnetic valve 44, and the accumulator 36) is not limited to any specific configuration but any publicly known configuration can be suitably used. The number and the position of each device and each member including the compressor 26 and the thermal-storage device 20C are not limited to the configuration shown in Fig. 6 but may be any other position capable of realizing the configuration of the heat pump type thermal-storage device.

The compressor 26, the blower fan, the upper and lower blades, the right and left blades, the four way valve 41, the expansion valve 42, the first electromagnetic valve 43, the second electromagnetic valve 44, and the like are electrically connected to a control system (not shown but, for example, a micro computer) and are controlled by the control system.

### [Operation of Air Conditioner]

An operation of the air conditioner 30 having the above configuration will be described in detail below by exemplifying a normal heating operation and a defrosting/heating operation with reference to Fig. 6.

Initially, the normal heating operation will be described below. In this case, the first electromagnetic valve 43 and the second electromagnetic valve 44 are subjected to a close control and the refrigerant discharged from the exhaust port of the compressor 26 flows through the first pipe 301 to reach the indoor heat exchanger 33 from the four way valve 41 via the external pipe 310 and the indoor unit internal pipe 311. In the indoor heat exchanger 33, the refrigerant is condensed by a heat exchange with the indoor air. The refrigerant flows through the second pipe 302 from the indoor heat exchanger 33 to reach the expansion valve 42 whereat being decompressed. Thus decompressed refrigerant passes through the third pipe 303 to reach the outdoor heat exchanger 34. In the outdoor heat exchanger 34, the refrigerant is evaporated due to the heat exchange with the outdoor air and the refrigerant flows through the fourth pipe 304 to return to an intake of the compressor 26 from the four way valve 41. Heat (waste heat) generated at the compressor 26 is stored in the thermal-storage solution layer 11 within the thermal-storage container 23 from the external wall of the compressor 26 via the thermally conductive member 25.

The defrosting/heating operation will be described below. During the normal heating operation, if frost is formed in the outdoor heat exchanger 34 to grow therein, a ventilation resistance of the outdoor heat exchanger 34 increases and thus an air flow rate decreases, resulting in a drop in an evaporation temperature within the outdoor heat exchanger 34. Therefore, when a temperature sensor (not shown) for detecting a temperature of the pipe of the outdoor heat exchanger 34 detects the drop of the evaporation temperature in comparison with a case of a non-frosted state, the control system outputs an instruction from the normal heating operation to the defrosting/heating operation.

When the operation is shifted from the normal heating operation to the defrosting/heating operation, the first electromagnetic valve 43 and the second electromagnetic valve 44 are subjected to an open control in which, in addition to a flow of refrigerant during the above normal heating operation, a portion of the vapor phase refrigerant coming out from the exhaust port of the compressor 26 flows through the fifth pipe 305 and the first electromagnetic valve 43 to join the refrigerant flowing through the third pipe 303, resulting in heating of the outdoor heat exchanger 34 and turning of the refrigerant into a liquid phase. Then, the refrigerant flows through the fourth pipe 304 to return to the intake of the compressor 26 via the four way valve 41 and the accumulator 36.

A portion of the liquid phase refrigerant diverted at somewhere between the indoor heat exchanger 33 and the strainer 35 in the second pipe 302 is evaporated and turned into the gas phase such that the heat regenerator 24 absorbs heat from the thermal-storage solution layer 11 via the sixth pipe 306 and the second electromagnetic valve 44. The vapor phase refrigerant flows through the seventh pipe 307 to join the refrigerant flowing through the fourth pipe 304, resulting in returning to the intake of the compressor 26 from the accumulator 36.

The refrigerant returning to the accumulator 36 includes liquid phase refrigerant returned from the outdoor heat exchanger 34. A mixture of the liquid phase refrigerant with the vapor phase refrigerant returned from the heat regenerator 24 at a high temperature accelerates the evaporation of the liquid phase refrigerant. Accordingly, returning of the liquid phase refrigerant to the compressor 26 passing through the accumulator 36 is avoided, thereby being able to improve reliability of the compressor 26.

The outdoor heat exchanger 34 having been below zero due to adhesion of frost upon starting the defrosting/heating is heated by the vapor phase refrigerant flowing out from the exhaust port of the compressor 26, resulting in causing the frost to melt at around zero. After the frost is completely molten, the temperature of the outdoor heat exchanger 34 comes to rise again. If the temperature rise of the outdoor heat exchanger 34 is detected by the temperature sensor, the control system determines that the defrosting is completed and outputs the instruction from the defrosting/heating operation to the normal heating operation.

As mentioned above, in the present embodiment, the air conditioner 30 is the heat pump type air conditioner, so that even if the frost is formed in the outdoor heat exchanger 34 during the heating operation or in the winter season, the refrigerant is caused to flow through the fifth pipe 305 and the sixth pipe 306 as the refrigerant bypass paths, thereby enabling heat recollection and defrosting. Therefore, the heating operation can be performed in parallel with the defrosting operation, so that, for example, in a chilly morning in the winter season, the heating can be achieved in short period of time. The waste heat from the compressor 26 can be recollected effectively, so that an operation in energy conservation can be performed.

In the thermal-storage device 20C, as mentioned in the third embodiment, since the evaporation prevention layer 13 is formed in the thermal-storage container 21, the thermal-storage solution can be effectively prevented from being excessively evaporated (realization of the evaporation prevention function), and also leakage of the thermal-storage solution out of the thermal-storage container 23 and the exposure to the air layer 12 can be suppressed (realization of the leakage prevention function). Still further, even if the pressure of the thermal-storage solution layer 11 significantly rises, steam or free gas is partially comes off from the liquid evaporation prevention layer 13 to the air layer 12, so that the pressure would not rise excessively and the sufficient treatment can be taken against the rise of pressure of the thermal-storage solution (realization of the pressure relaxation function).

In the present embodiment, the air conditioner 30 has, but not limited to, a configuration of the heat pump type but, needless to say, may have a configuration other than the heat pump type. Instead of the thermal-storage device 20C, the thermal-storage device 20A or 20B described in the first or second embodiments can be equipped or the thermal-storage device of the other configuration within the scope of the present invention can be equipped. In the present embodiment, the compressor 26 is used as the heat source, and other device such as an electric heater may be used as the heat source.

In the air conditioner is exemplified as an example to which the thermal-storage device 20A to 20C according to the present invention is applied; however, needless to say, the present invention is not limited thereto but can be suitably used to various types of devices provided with the thermal-storage device other than the air conditioner. More specifically, for example, a refrigerator, a hot water supply, a heat pump type washing machine can be exemplified.

The present invention is not limited to the description of each embodiment of the present invention but can be made into various modifications within the scope of claims of the invention. An embodiment obtained by a combination of technical means disclosed in each of the different embodiments and a plurality of modifications is also encompassed within a technical scope of the present invention.

The present application claims priority of the basic applications of Japanese Patent Application, JP 2010-216442. JP 2010-216442 is incorporated herein by reference.

### Industrial Applicability

Not only the present invention can be preferably used in a thermal-storage device and an air conditioner, but also it can be effectively used in a refrigerator, a hot water supply, a heat pump type washing machine and the like.

### Description of Reference Numerals

- 11: Thermal-storage solution layer
- 12: Air layer
- 13: Evaporation prevention layer
- 14: Slightly soluble basic substance
- 20A, 20B, 20C: Thermal-storage device
- 21, 23: Thermal-storage container
- 22, 24: Thermal-storage heat exchanger
- 25: Thermal conductive member
- 26: Compressor (Heat source, Heater)
- 214, 234: Vent hole

## Claims

1. A thermal-storage device comprising a thermal-storage solution layer composed of a thermal-storage solution comprising water, a heat exchanger immersed in the thermal-storage solution layer, and a thermal-storage container in which the thermal-storage solution layer and the heat exchanger are disposed in the interior space thereof,
wherein a slightly soluble basic substance containing, as a main component, at least one selected from the group consisting of magnesium oxide, magnesium hydroxide, magnesium carbonate, magnesium silicate and metal magnesium is immersed in the thermal-storage solution layer.

2. The thermal-storage device according to claim 1, wherein the slightly soluble basic substance is a material containing, as a main component, a magnesium oxide mixed with silicic acid and/or aluminum oxide.

3. The thermal-storage device according to claim 1 or 2, wherein the slightly soluble basic substance is a material containing, as a main component, magnesium oxide mixed with iron oxide.

4. The thermal-storage device according to any one of claims 1 to 3, wherein the slightly soluble basic substance is a material containing, as a main component, magnesium oxide mixed with calcium oxide.

5. The thermal-storage device according to any one of claims 1 to 4, wherein the slightly soluble basic substance is a material containing, as a main component, magnesium oxide and fired at 1,500 to 2,300°C.

6. The thermal-storage device according to any one of claims 1 to 5, wherein the slightly soluble basic substance is a material containing, as a main component, magnesium oxide having a particle diameter of 1 to 15 mm.

7. The thermal-storage device according to any one of claims 1 to 6, wherein the thermal-storage solution is an aqueous solution containing a dihydric alcohol.

8. The thermal-storage device according to claim 7, wherein the thermal-storage solution is an aqueous solution containing an anti-oxidizing solution preventing oxidation of the dihydric alcohol.

9. The thermal-storage device according to any one of claims 1 to 8, wherein an evaporation prevention layer is disposed on the upper portion of the thermal-storage solution layer, the evaporation prevention layer is composed of a solvent composition of at least one water-insoluble solvent, the solvent composition has a pour point lower than normal temperature, and the water-insoluble solvent contains at least any one of hydrocarbons having carbon atoms within a range from 24 to 44.

10. The thermal-storage device according to any one of claims 1 to 9, wherein the heat exchanger is a thermal-storage heat exchanger to recover heat stored in the thermal-storage solution layer, and wherein further comprising a heat source to heat the thermal-storage solution.

11. The thermal-storage device according to claim 10, wherein the heat source is provided outside the thermal-storage solution layer, and the thermal-storage heat exchanger is provided inside the thermal-storage container at the position where the thermal-storage heat exchanger is immersed in the thermal-storage solution layer.

12. The thermal-storage device according to claim 10 or 11, wherein the thermal-storage container is provided so as to surround the heat source.

13. The thermal-storage device according to any one of claims 10 to 12, wherein the thermal-storage container is in contact with the heat source through a thermal conductive member.

14. An air conditioner comprising the thermal-storage device according to any one of claims 1 to 13.
